Europäisches Patentamt

European Patent Office

Office européen des brevets

(19)

(11) Veröffentlichungsnummer: **0 120 806**

**A2**

(12) **EUROPÄISCHE PATENTANMELDUNG**

(21) Anmeldenummer: **84730024.1**

(22) Anmeldetag: **16.03.84**

(51) Int. Cl.³: **H 04 N 7/13**

(30) Priorität: **18.03.83 DE 3310411**
**18.03.83 DE 3310412**
**19.05.83 DE 3318484**

(43) Veröffentlichungstag der Anmeldung:
**03.10.84 Patentblatt 84/40**

(84) Benannte Vertragsstaaten:
**AT BE CH DE FR GB IT LI LU NL SE**

(71) Anmelder: **Heinrich-Hertz-Institut für**
**Nachrichtentechnik Berlin GmbH**
**Einsteinufer 37**
**D-1000 Berlin 10(DE)**

(72) Erfinder: **Heydt, Günter**
**Steilpfad 35**
**D-1000 Berlin 10(DE)**

(72) Erfinder: **Lukanek, Frank**
**Falkenseer Damm 6**
**D-1000 Berlin 20(DE)**

(72) Erfinder: **Teich, Georg**
**Im Rosengrund 3**
**D-1000 Berlin 47(DE)**

(74) Vertreter: **Wolff, Konrad**
**Heinrich-Hertz-Institut für Nachrichtentechnik Berlin**
**GmbH Einsteinufer 37**
**D-1000 Berlin 10(DE)**

(54) Kanalwählerschaltung für digitale, bitweise verschachtelte Breitbandkanäle.

(57) In der Teilnehmerebene soll ein großes Angebot an Schmal- und Breitbanddiensten möglich sein. Deren Trennung kann beispielsweise mit Hilfe der Wellenlängen-Multiplex-Technik erfolgen.

Für Bewegtbildkanäle (Farb-TV, 625 Zeilen) werden etwa je 70 Mbit/s benötigt, für Bewegtbilder mit höherer Auflösing (HDTV) etwa die vierfache Bitrate, also 280 Mbit/s. Ein Mehrkanalsystem mit Zeitteilung hierfür erfordert verhältnismäßig geringen schaltungstechnischen Aufwand, wenn die einzelnen Bitströme in bitserieller Form vorliegen und in dieser Form voneinander leicht getrennt werden können. Dazu dienen die erfindungsgemäßen Kanalwähler. Sie bestehen im wesentlichen aus einer bistabilen Selektorschaltung und einer Taktversorgung, mit denen der betreffende Bewegtbildkanal selektiert und dem Endgerät zugeführt wird. Zur Taktversorgung dienen Zeitlagendetektoren, mit denen die betreffende Zeitlage bestimmt wird. Dies geschieht streng hierarchisch, stochastisch oder in kontinuierlich aufeinander folgenden Schritten, bis die dem gewählten Kanal zugeordnete Zeitlage erreicht ist. Das Teilerverhältnis ist für TV (derzeitiger Standard) und HDTV einstellbar.

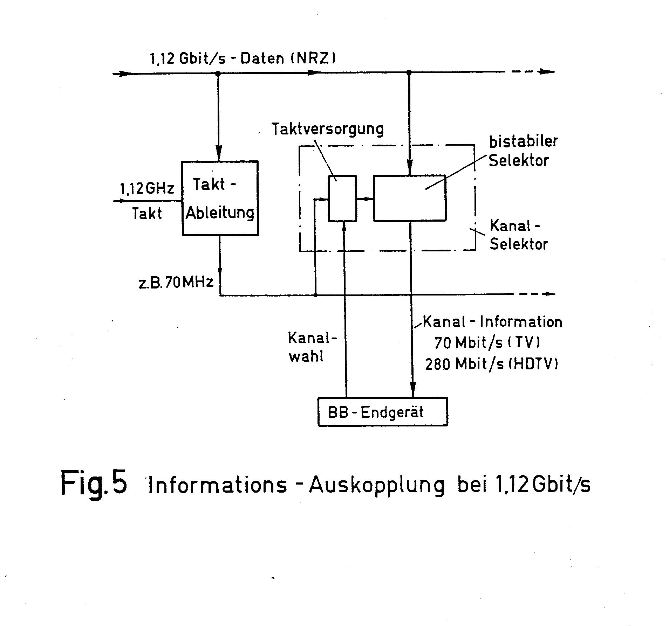

Fig.5 Informations - Auskopplung bei 1,12 Gbit/s

Heinrich-Hertz-Institut für Nachrichtentechnik Berlin
GmbH                                  19/0383 EP

Kanalwählerschaltung für digitale, bitweise verschachtelte Breitbandkanäle

Die Erfindung bezieht sich auf Kanalwählerschaltungen der im Oberbegriff des Patentanspruches 1 angegebenen Art.

Für nachrichtentechnische Systeme mit Bildübertragung
in Teilnehmeranschlußnetzen gibt es Vorschläge und
Konzepte in großer Zahl. Beispielsweise ist aus der
DE - A 29 22 418 ein diensteintegriertes Nachrichten-
übertragungs- und Vermittlungssystem für Ton, Bild und
Daten bekannt, das mit geringem Aufwand, insbesondere
bei der Einführung neuer Dienste ohne aufwendige Neuinstallationen auskommen soll. Dies soll mit Hilfe
folgender Maßnahmen erreicht werden:

1. Die Teilnehmeranschlußleitung enthält höchstens ein
   Lichtleitfasersystem,

2. die Lichtleitfaser wird im Wellenmultiplex-Duplex-
   Betrieb ausgenutzt,

3. die Schmalbanddienste erfolgen mittels digitaler
   Übertragung, wobei Analog-Digital- bzw. Digital-
   Analog-Wandlung und Multiplexbildung beim Teilnehmer erfolgen,

4. die Breitbanddienste erfolgen mittels analoger
   Übertragung,

5. Einsatz eines Vorfeld-Konzentrators mit Multiplex-
   Funktionen für die Schmalbanddienste und Vermittlungsfunktionen für die Breitbanddienste,

6. Einsatz von Lichtleitersystemen für die Verbindungsleitung Konzentrator-Vermittlungsstelle, beispielsweise Ortsamt, bzw. Konzentrator-Konzentrator
   bzw. zwischen den Vermittlungsstellen,

7. Vermittlung der Schmalbanddienste im Zeitvielfach und

8. Vermittlung der Breitbanddienste im Raumvielfach.

In diesem Zusammenhang ist auch auf Versuchssysteme für breitbandige integrierte Glasfaser-Fernmeldeortsnetze (BIGFON) hinzuweisen, die sich in der Aufbauphase befinden und mit bereits verfügbarer Technologie realisiert werden. Das heißt, als Lichtwellenleiter werden Gradientenfasern verwendet, und für die Schaltungen breitbandiger Systemteile stehen IC-Familien mit Arbeitsgeschwindigkeiten unterhalb 300 MHz und mit relativ niedrigem Integrationsgrad zur Verfügung.

In der optischen Nachrichtentechnik zeichnen sich aber bereits technologische Weiterentwicklungen ab, die sich auf künftige, für einen verbreiteten Einsatz bestimmte Systeme in zweierlei Hinsicht auswirken können. Einerseits werden bei weiter Verbreitung, d.h. großen Stückzahlen, Aufwandsreduzierungen z.B. durch Anwendung funktionsspezifischer und hochintegrierter schneller Mikroelektronik möglich. Dies gilt bei im Vergleich zu den Versuchssystemen unveränderten Leistungsmerkmalen im Bereich der Bewegtbilddienste. Andererseits läßt sich die Leistungsfähigkeit der Systeme im Bereich der Bewegtbilddienste im Hinblick auf zukünftige neue Anforderungen noch beachtlich erhöhen. Im Interesse der Zukunftssicherheit sollten z.B. künftige Systeme auch für die Übermittlung von Fernsehbildern mit hoher Auflösung, sogenannten HDTV-Signalen, geeignet sein. Außerdem ist eine Erhöhung der Anzahl der gleichzeitig einem Teilnehmer zu übermittelnden TV-Programme denkbar. Hierdurch würden solche Systeme hinsichtlich eines TV-Grundangebots den bestehenden Kabelfernsehsystemen vergleichbar, wobei jedoch die Anonymität der Teilnehmer in ihrem Verhalten gewährleistet bleiben könnte und sich diesbezügliche Vorbehalte weitgehend entkräften ließen.

Die erwähnten Forderungen - HDTV-Eignung und Erhöhung
der Zahl gleichzeitig übermittelter Programme - führen
zu einem, im Vergleich zu BIGFON-Systemen deutlich
erhöhten Bedarf an Übertragungskapazität im Bereich
der Teilnehmeranschlußleitung, zu deren Realisierung
daher sowohl eine etablierte, sehr hochratige optische
Übertragungstechnik, einschließlich Wellenlängen-Multiplex-Technik, als auch geeignete elektronische Bauelemente, möglichst in integrierter Form, für den
Gbit/s-Bereich benötigt werden. Die erste Forderung
läßt sich mit hochratigen optischen Übertragungsstrek-
ken erfüllen, die z.B. im optischen Langwellenbereich
arbeiten und Monomodefasern als Übertragungsmedien
verwenden. Der zweiten Forderung kommt erfahrungsgemäß
die Industrie sehr schnell nach, wenn ihr geeignete
Wege aufgezeigt werden.

Eine Erhöhung des Bewegtbild-Angebots legt an sich den
Schluß nahe, daß dies einen entsprechend erhöhten
schaltungstechnischen Aufwand erfordert. Bei der Erfindung wird aber von Voraussetzungen ausgegangen, die
zu überraschend einfachen Lösungen führen. Diese Voraussetzungen bestehen darin,
- daß in der Zentrale aus Gründen der Reduzierung der
  Anzahl von Anschlußkontakten die den TV-Programmen
  zuzuordnenden Bitströme in bitserieller Form vorliegen und
- daß den einzelnen Breitband-Endgeräten des Teilnehmers diese Bitströme ebenfalls seriell, z.B. auch
  über Koaxkabel, zuzuführen sind.

Eine bitweise Schachtelung modulierter Probenwerte einzelner Quellen ist als solche durchaus bekannt, wird aber selten angewendet. Dabei handelt es sich um eine geordnete Folge modulierter Probenwerte, bei der der Abstand der Proben, also die Zeitdifferenz zwischen dem Eintreffen von zwei aufeinanderfolgenden Proben am Multiplexteil des Senders, gleich oder näherungsweise gleich bleibt und keine Koinzidenzen auftreten können. Für den Übertragungsweg ist daher eine Zeichenrasterung vorauszusetzen. Die durchschnittliche Wartezeit der einzelnen Proben wird gegenüber der im allgemeinen üblichen Wortschachtelung beträchtlich verringert (s. beispielsweise: Fernmeldetechnik 9 (1969) H.8, S. 241 ff). Die Zusammenfassung einiger - weniger - Bitströme niedriger Bitrate mit exaktem Synchronismus zu einem Bitstrom entsprechend höherer Bitrate ist mit bitweiser Verschachtelung sehr einfach, weil dazu keine Zwischenspeicherung erforderlich ist und lediglich Torschaltungen eingesetzt zu werden brauchen. Allerdings - und hier liegt wohl der Grund für die seltene Anwendung der bitweisen Verschachtelung - wird die Tatsache, daß jedes Bit eines Wortes im Bitstrom mit der hohen Bitrate isoliert erscheint, als problematisch angesehen (s. beispielsweise: An Introduction to Digital Integrated Communications Systems; Inose, H., University of Tokyo Press, 1979, S. 40).

Eben diese Tatsache wird nun bei der Erfindung aus folgendem Grunde angewendet und ausgenutzt: Das Übertragungsmedium - insbesondere eine Monomodefaser - läßt Übertragungsraten im Gbit/s-Bereich zu. Elektronische Bauelemente mit Arbeitsgeschwindigkeiten unter 300 MHz sind verfügbar. Läßt sich nun die Umsetzung aus dem Gbit/s-Bereich in Bitraten unterhalb 300 Mbit/s mit einfachen Mitteln beherrschen, sind für eine Einführung zukunftssicherer Systeme die technischen Voraussetzungen erfüllt.

Gemäß der Erfindung erfolgt die Lösung dieser Aufgabe durch die im Patentanspruch 1 angegebenen kennzeichnenden Merkmale.

Die wesentliche Bedeutung der Erfindung liegt demnach darin, für die Verschachtelung der einzelnen Kanäle ein solches Prinzip anzuwenden, das für die Trennung der Kanäle mit möglichst wenigen, leicht realisierbaren Schaltungen hoher Arbeitsgeschwindigkeit und im übrigen mit herkömmlichen elektronischen Bauelementen auszukommen gestattet.

Bevor auf besonders bevorzugte Ausführungsformen der Erfindung näher eingegangen wird, soll zunächst noch anhand eines Beispiels das Wesen der Erfindung verdeutlicht werden.

Bei sehr hochratigen optischen Übertragungsstrecken, mit deren Realisierung bei der Anmelderin im Jahre 1975 begonnen wurde, sind kurz nach 1980 folgende Ergebnisse erzielt worden:

| Bitrate Gbit/s | Faserlänge km | Fasertyp | Anzahl der TV-Kanäle | |
|---|---|---|---|---|
| | | | 70 Mbit/s | 140 Mbit/s |
| 1,12 | | | 16 | 8 |
| | 21 | Monomode | | |
| 2,24 | | | 32 | 16 |

Dabei wurde mit 1,3 µm Laserwellenlänge gearbeitet, die Fehlerrate bei vollständiger Signalregeneration war kleiner als $10^{-9}$.

Eine Bandbreite von 70 Mbit/s bzw. 140 Mbit/s reicht für einen Bewegtbildkanal mit üblicher Auflösung aus. 280 Mbit/s ermöglichen eine höhere Auflösung (HDTV = High Definition Television) und sind noch immer mit marktüblichen elektronischen Bauelementen beherrschbar. Selbst in einem solchen Fall wird also die Arbeitsgeschwindigkeit von 300 MHz für Bauelemente in einem Breitbandgerät nicht überschritten. Allein für die Trennung der Breitbandkanäle, d.h. für die Kanalwahl, ist ein für höhere Bitraten geeignetes Bauelement, z.B. ein D-Flip-Flop, erforderlich, das bereits in integrierter Form auf dem Markt ist. Der Ansteuerung eines solchen Abtastelements kommt nun natürlich besondere Bedeutung zu. Denn hierbei sollten ebenfalls möglichst weitgehend Bauelemente mit Arbeitsgeschwindigkeiten unterhalb 300 MHz einzusetzen sein.

Dies wird bei der Erfindung auf alternativen Wegen aufgrund folgender Überlegung erreicht: Zunächst wird unterstellt, daß sowohl der Bittakt Clb als auch der Multiplextakt Clm zur Verfügung stehen. Zwischen diesen beiden Takten gilt die Beziehung $Clb = 2^n \cdot Clm$. Auf der signalführenden Leitung hat demnach der serielle Informationsfluß eine Bitrate von $f_n$ bit/(Hz $\cdot$ s).

Einer der erfindungsgemäßen, alternativen Lösungswege erlaubt, in einer ersten Stufe diesen Informationsfluß mithilfe einer getaktet arbeitenden bistabilen Kippschaltung (FF) mit einer Frequenz $f_m = f_n/2$ abzuta- sten. Dadurch wird bereits jedes zweite Bit ausgeblendet bzw. übernommen, d. h., eine erste, partielle Select-Funktion ausgeführt.

Ausgehend von einer Zeitmarke, die z.B. durch die im Zeitmultiplexsystem vorausgesetzt enthaltene Synchronisierinformation gegeben ist, werden somit zunächst entweder nur alle geradzahligen oder ungeradzahligen Bits übernommen. Um mit Bezug auf die Zeitmarke nun eine gezielte Select-Funktion durchführen zu können, wird vorausgesetzt, daß das Abtastsignal $f_m$ ein Synchrontaktsignal ist, das aus einer Taktrückgewinnungs- bzw. Synchronisiereinrichtung gewonnen wird und somit phasenmäßig starr an diese Zeitmarke gebunden ist. Mithilfe einer 180°-Phasenumtastung dieses als FF-Ansteuersignal verwendeten Synchrontaktes wird durch das Select-Signal eine individuell einstellbare Select-Funktion erreicht. Durch Kaskadierung von k Stufen dieser Art kommt es zu einer Select-Funktion, die eine Bitrate des selektierten Signals entsprechend $f_k = f_n/2k$ ergibt. Dieses Prinzip hat folgende Vorzüge:

- Das schnellste zum Betrieb erforderliche Taktsignal hat lediglich die Frequenz $f_m = f_n/2$.
- Von Stufe zu Stufe sinken die Anforderungen an die Genauigkeit der Ansteuerphasen. Das bedeutet, Probleme temperaturbedingter Drift, von Exemplarstreuungen etc. werden stark reduziert.
- Es handelt sich um eine rein digitale, übersichtlich strukturierte, einfache Lösung, die eine relativ einfache 1-Chip-Kompakt-Integration ermöglicht.
- Die technische Realisierung führt zu einer autonom arbeitenden Schaltung.
- Eine solche Schaltung ermöglicht extrem kurze Select-Zeit (= minimal mögliche Select-Zeit). Dadurch ist die Schaltung vielseitig verwendbar, auch dort, wo kurze Select-Zeiten erforderlich sind, z.B. in Vermittlungsstellen.

Nach üblichen Vereinbarungen bezüglich der Organisation eines Zeitmultiplexrahmens wird der Rahmenanfang durch ein Synchronisierzeichen gekennzeichnet. Die dafür benötigten Zeitplätze stehen zwar nicht für die Übertragung von Nutzinformationen zur Verfügung, ermöglichen aber eine genaue Synchronisation. Hieraus folgt, daß bei Verwendung einer der Zeitlagen zur Ableitung des Multiplextaktes Clm ein insoweit modifizierter Kanalwähler ausreicht, als dort statt des Vergleichs von Phasenlagen das Synchronisierzeichen aufzufinden ist.

Bei einem anderen erfindungsgemäßen Lösungsweg ist jedem Kanalwahlmodul ein Frequenzteiler mit dem Teilungsverhältnis $2^n$ zugeordnet. Damit kann am Ausgang des Teilers, je nach seinem Einschaltzeitpunkt, jede der $2^n$ zur Kanalwahl möglichen Zeitlagen erzeugt werden. Zur Einstellung der richtigen, d. h. der dem angewählten Kanal entsprechenden Zeitlage, wird zunächst der Teiler willkürlich an den Bittakt Clb angeschlossen. An seinem Ausgang steht dann ein Takt Cld zur Verfügung, dessen Frequenz der des Multiplextaktes Clm entspricht, dessen Zeitlage bzw. Phase jedoch $2^n$-fach unbestimmt ist. Durch eine Phasenmessung zwischen Multiplextakt Clm und Teilertakt Cld wird eine Gleichspannung abgeleitet, die die Übereinstimmung bzw. die Abweichung zwischen gewählter und vorhandener Zeitlage darstellt. Nach der Wahrscheinlichkeitsrechnung ist einer von $2^n$ Versuchen, bei der willkürlichen Anschaltung des Bittaktes Clb die richtige Zeitlage zu treffen, erfolgreich. Deshalb wird im Falle einer Abweichung von der gewünschten Zeitlage die Anschaltung des Bittaktes Clb an den Teiler kurzzeitig, jedoch für eine große Zahl von Bittakten, unterbrochen. Damit erhält der Teiler, bezogen auf den Multiplextakt Clm, einen neuen Anfangszustand, so daß sich - sehr wahrscheinlich - eine andere Zeitlage ergeben wird. Es wird also sooft und solange versucht, bis die gewünschte Zeitlage getroffen wird. Jeder dieser Versuche läuft jedoch - bezogen auf das menschliche Wahrnehmungsvermögen - in so kurzer Zeit ab, daß sich die gewünschte Zeitlage ergibt und der Frequenzteiler dauernd angeschaltet bleiben kann, lange bevor, d.h. ohne daß ein Teilnehmer diese Vorgänge überhaupt bemerken kann.

Die Steuerung der Einstellung kann mittels eines Mikrocomputers erfolgen, in den die Ergebnisse der Phasenmessungen über einen Multiplex-A/D-Wandler übertragen werden. Das Erreichen der richtigen Zeitlage wird in diesem Mikrocomputer beispielsweise durch Vergleich der digitalisierten Phasenmeßspannungen mit Werten, die den einzelnen Kanälen zugeordnet und in einem Tabellenspeicher abgelegt sind, herbeigeführt.

Dieser Lösungsweg kann weiter und vorteilhaft ausgebildet werden durch eine Kanalwählerschaltung mit
- einem kontinuierlich, in sich überlappenden Schritten verstellbaren Phasenschieber, der den ihm zugeführten Bittakt zeitlich verschoben an den Frequenzteiler weiterleitet,
- einem Synchronisierzeichenvergleicher, mit dessen Hilfe eine fest vorgegebene Zeitlage im Multiplexrahmen ermittelt wird, um als Ausgangslage für die Einstellung eines gewählten Kanals zu dienen, und mit
- einer Steuereinrichtung, die den Umfang der erforderlichen Verstellung im Phasenschieber, sowohl zum Auffinden der Ausgangslage als auch zur Einstellung eines gewählten Kanals, bestimmt.

Einzelheiten der Erfindung und ihrer bevorzugten Ausführungsformen, auch die in den Unteransprüchen angegebenen Merkmale, werden nachfolgend anhand der schematischen Darstellungen in den Zeichnungen näher erläutert.

Dabei zeigen:

Fig. 1: ein Schaubild für die Struktur eines
HDTV-fähigen Übermittlungssystems,

Fig. 2: eine Tabelle mit Beispielen unterschiedlicher Nutzungsmöglichkeiten eines
1,12 Gbit/s-Kanals im Teilnehmeranschlußbereich,

Fig. 3: ein Organisationsschema für einen Multiplexrahmen mit bitweiser Verschachtelung
der Kanäle,

Fig. 4: die Systemkomponenten für die Übertragung
zwischen Zentrale und Teilnehmer,

Fig. 5: ein Prinzip-Blockschaltbild für einen Kanalwähler zur Informationsauskopplung bei
1,12 Gbit/s-Daten (NRZ-Format),

Fig. 6: ein Prinzip-Blockschaltbild für einen Kanalwähler mit Mehrstufen-Abtastung,

Fig. 7: ein Prinzipschaltbild für einen vierstufigen Kanalwähler,

Fig. 8: ein Prinzipschaltbild für einen k-stufigen Kanalwähler,

Fig. 9: ein Prinzipschaltbild für einen (k-m)-
stufigen Kanalwähler,

Fig. 10: ein Prinzipschaltbild für einen Kanalwähler mit dem Stufenverhältnis 2:2:4,

Fig. 11: ein Prinzipschaltbild für einen Kanalwähler mit dem Stufenverhältnis 2:2:4, jedoch mit optimierter Abtastintervalleinstellung in der 2. Stufe,

Fig. 12: ein Prinzipschaltbild für einen Kanalwähler mit dem Stufenverhältnis 4:4,

Fig. 13: ein Prinzipschaltbild für einen Kanalwähler mit dem Stufenverhältnis 2:8,

Fig. 14: ein Prinzipschaltbild für einen bezüglich
der Ableitung der Synchrontakte modifizierten Kanalwähler mit Mehrstufen-Abtastung,

Fig. 15: ein vollständiges Schaltbild für einen Kanalwähler mit Mehrstufen-Abtastung,

Fig. 16: das Layout (Bestückungsplan) für eine Kanalwählerschaltung gemäß Fig. 15,

Fig. 17: ein detailliertes Blockschaltbild für einen Kanalwähler mit einstufiger Abtastung,

Fig. 18: ein Blockschaltbild für einen modular erweiterbaren Kanalwähler gemäß Fig. 17,

Fig. 19: ein Prinzip-Blockschaltbild für einen Kanalwähler ähnlich Fig. 17,

Fig. 20: ein Prinzip-Schaltbild eines digital
steuerbaren Phasenschiebers für den Kanalwähler gemäß Fig. 19,

Fig. 21: ein Prinzip-Schaltbild eines Frequenzteilers für einen Kanalwähler gemäß Fig. 19,

Fig. 22: ein Prinzip-Schaltbild eines reduzierten
statisch getakteten D-Flip-Flops für einen
Kanalwähler gemäß Fig. 19,

Fig. 23: ein Blockschaltbild für ein modular erweiterbares Kanalwählersystem gemäß Fig. 19,

und Fig. 24: ein Gesamtschaltbild der Schaltungen gemäß Fig. 20, 21 und 22 (Teile 1,2 und 3).

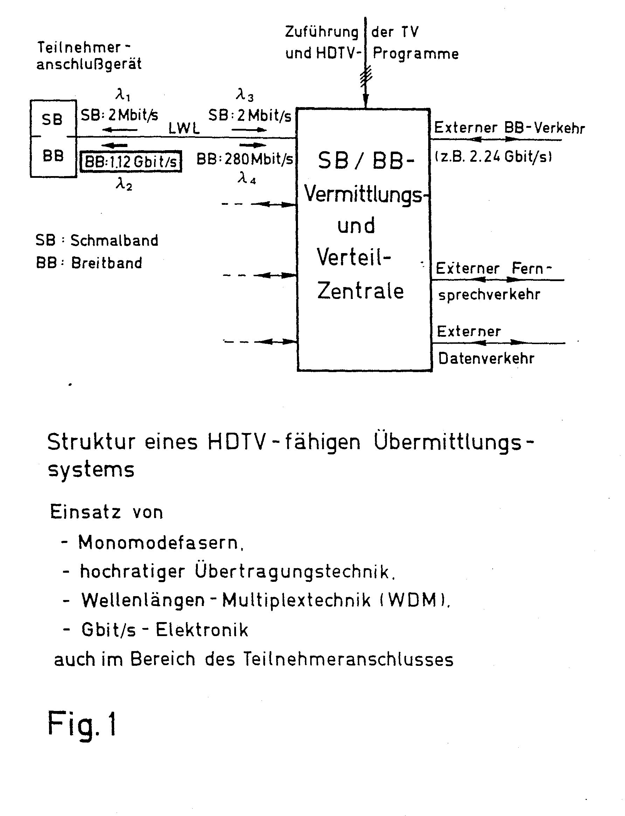

Fig. 1 zeigt in stark vereinfachter Form die Struktur eines zukunftssicheren Systems. Seine wesentlichen Merkmale sind:
- Benutzung der Wellenlängen-Multiplex-Technik zur Trennung von Schmalband- und Breitbandbereich und
- Verwendung einer Bitrate von 1,12 Gbit/s auf der Teilnehmeranschlußleitung in Richtung zum Teilnehmer.

Die getrennte Übertragung von Schmalband- und Breitbandsignalen hat folgende Vorteile:
- Möglichkeit der Notstromversorgung der Schmalbanddienste (Fernsprechen), da für den Schmalbandbereich nur niederratige, hochintegrierbare Elektronik benötigt wird,
- Angebot von Breitbanddiensten als Option, d.h. hochratige Elektronik mit höherem Leistungsbedarf wird nur für den Fall verwendet, daß entsprechende Dienste tatsächlich genutzt werden sollen,
- unterschiedlich definierbare Multiplex-Rahmenstrukturen für die beiden Bitraten-Bereiche, bei denen die unterschiedlichen Gegebenheiten beider Bereiche, nämlich die praktisch beliebigen Bit-Manipulationsmöglichkeiten im Schmalbandbereich und der begrenzte zulässige Hardware-Aufwand im Breitbandbereich, berücksichtigt werden können.

Die Verwendung einer Bitrate von 1,12 Gbit/s folgt beispielsweise aus den für die einzelnen TV- und HDTV-Kanäle im Teilnehmerbereich gewählten Raten. Hier sind Bitraten bei etwa 70 Mbit/s für TV und für den genau vierfachen Wert für HDTV sinnvoll. Maßgebend hierfür ist die Überlegung, daß ein gewisser Aufwand für Codecs in den Teilnehmerendgeräten mit dem Ziel zugelassen werden sollte, Hardware-Aufwand und insbesondere Leistungsverbrauch bei den Vermittlungseinrichtungen in der Zentrale zu reduzieren.

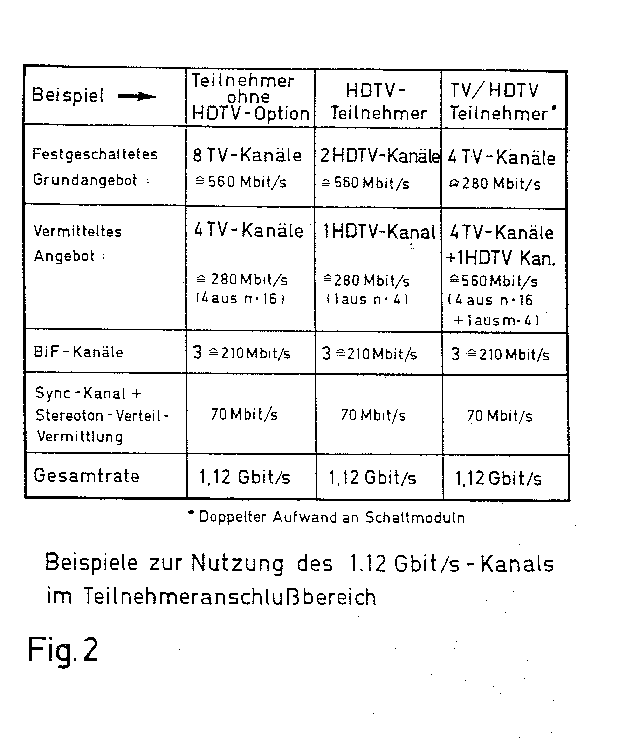

Beispiele für die Nutzungsmöglichkeiten eines 1,12 Gbit/s-Kanals im Teilnehmeranschlußbereich sind in Fig. 2 angegeben:
- Breitbandteilnehmern, die ausschließlich über TV-Geräte nach jetzigem Standard verfügen, wird ein festes Grundangebot von 8 Programmen, entsprechend den ortsüblichen Programmen, übermittelt. Diese Programme können dem jeweiligen Endgerät direkt über die Teilnehmeranschlußeinrichtung, ohne Einschaltung der Zentrale, zugeleitet werden. Vier weitere, aus einem größeren Angebot wählbare Programme können dem Teilnehmer über Verteilvermittlungsmoduln durch die Zentrale übermittelt werden. Daneben werden bis zu 3 Bif-Kanäle und Stereoton-Verteildienste angeboten (Bif: Bildfernsprechen).
- Dem Teilnehmer, der ausschließlich HDTV nutzen will, steht ein festes Grundangebot von 2 HDTV-Kanälen und ein aus einer größeren Anzahl von Programmen auswählbares HDVT-Programm zur Verfügung.
- Teilnehmern, die sowohl TV als auch HDTV nutzen wollen (dies dürfte wahrscheinlicher sein als die im vorigen Beispiel erläuterte ausschließliche HDTV-Nutzung), kann z.B. ein Grundangebot von 4 TV-Programmen und einem HDTV-Programm übermittelt werden. Hierfür wird allerdings in der Zentrale der doppelte Aufwand an Schaltmoduln für die Verteilvermittlung erforderlich.

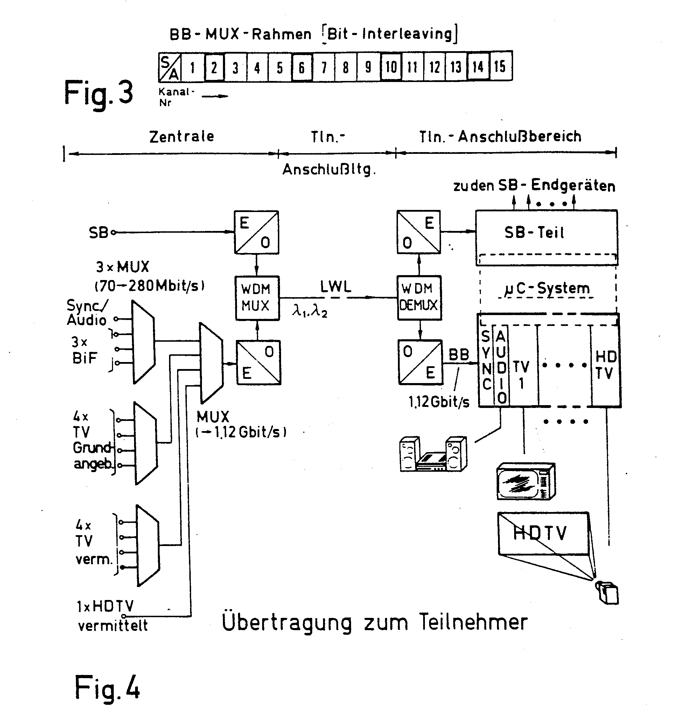

Bei derartigen Systemen führt eine bitweise verschachtelte Multiplex-Rahmenstruktur zu hardwaremäßig aufwandsarmen Multiplex- und Demultiplex-Einrichtungen. Da besonders bei sehr hohen Bitraten ein niedriger Hardware-Aufwand ausschlaggebende Bedeutung hat, ist bitweise verschachteltes Zusammenfassen der einzelnen, den 70 Mbit/s-Grundkanälen zuzuordnenden Bitströme auf der Teilnehmeranschlußleitung vorteilhaft und sinnvoll, wobei ein in Fig. 3 angegebener Multiplex-Rahmen-Aufbau benutzt werden kann. Bei diesem, aus jeweils 16 Bit bestehenden Rahmen dient das jeweils erste Bit von Rahmen zu Rahmen abwechselnd zu Synchronisationszwecken bzw. zur Stereoton-Übertragung. Jedes der folgenden 15 Bit gehört der Reihe nach zu jeweils einem der 15 Grundkanäle à 70 Mbit/s. Zur Übertragung eines HDTV-Programms werden jeweils vier dieser Grundkanäle zusammengefaßt, wobei die zugehörigen Bit innerhalb des Rahmens kammartig im 280 MHz-Takt aufeinander folgen. In Fig. 3 sind hierfür die Kanäle mit den Nummern 2,6,10 und 14 eines Multiplex-Rahmens hervorgehoben. Weitere bzw. alternative HDTV-Kanäle lassen sich selbstverständlich mit den Kanalnummern 1,5,9 und 13 bzw. 3,7,11 und 15 bilden.

Aus Fig. 4 ist folgendes zu erkennen:
Im Vergleich zu BIGFON-Systemen liegt der notwendige Mehraufwand zunächst im Bereich der Einspeisung der Bewegtbild-Signale in die Teilnehmeranschlußleitung. Dieser Mehraufwand besteht im wesentlichen in dem etwas komplexeren und hochratigeren Multiplexer und in dem Aufwand zur Zuführung des Grundangebots. Der Multiplexer wird zweckmäßigerweise mit einer 280 Mbit/s-Zwischenstufe ausgeführt, so daß HDTV-Bitströme unmittelbar bitseriell an die 280 Mbit/s-Eingänge angeschlossen werden können.

- 15 -

Die grundsätzliche Funktion der Einrichtungen zur Verteilvermittlung und zur Bif-Vermittlung unterscheidet sich dagegen kaum von der der BIGFON-Systeme. Die sehr hochratige optische Übertragungsstrecke ist hinsichtlich der Zahl ihrer Funktionsgruppen prinzipiell ebenfalls mit niederratigeren Strecken vergleichbar; der kostenmäßige Aufwand wird hier letztlich von der Frage bestimmt, welche optoelektronischen bzw. mikrolektronischen Bauelemente für eine Massenproduktion vorgesehen sind.

Eine wesentliche Forderung für den Bereich der Breitband-Teilnehmeranschlußeinrichtung besteht darin, diese modular erweitern zu können, d.h. jedem Breitband-Endgerät sollte ein eigener Anschlußmodul zugeordnet werden, so daß sich der auftretende Hardware-Aufwand der Anzahl der angeschlossenen Endgeräte anpassen läßt.

Das Grundprinzip eines derartigen erfindungsgemäßen Kanalselektor-Moduls ist in Fig. 5 dargestellt:

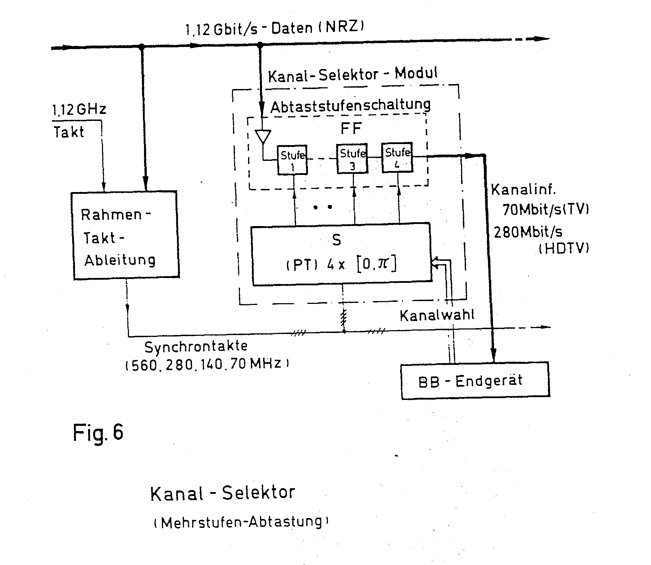

Die Kanalwählerschaltung gemäß Fig. 6 ist an die signalführende Leitung angeschlossen, auf der mit Zeitteilung nach dem Bit-Interleaving-Prinzip organisierte serielle Datensignale übertragen werden. Diese Kanalwählerschaltung hat nun die Aufgabe, eine bestimmte Kanalinformation wahlfrei aus dem seriellen Datenfluß ohne Informationsverlust auszukoppeln und einer kanalspezifischen Weiterverarbeitung, z.B. in einem angeschlossenen Breitband-Endgerät, zugänglich zu machen.

Der Kanalselektor-Modul - strich-punktiert eingerahmter Teil - arbeitet streng hierarchisch durch räumlich und zeitlich sequentielle Abtastung in mehreren, z.B. k Stufen. Er benötigt dementsprechend k Synchrontakte, auf deren Generierung später noch näher eingegangen wird. Zunächst kann deshalb unterstellt werden, daß für einen Datenstrom auf der signalführenden Leitung mit einer Gesamtbitrate von 1,12 Gbit/s die Takte von 560 MHz, 280 MHz, 140 MHz und 70 MHz vorhanden und verfügbar sind.

Die seriellen Daten von der Leitung gelangen, z.B. über einen Trennverstärker, in die Abtaststufenschaltung FF, die im gewählten Beispiel 4 Stufen enthält. Von der Abtaststufenschaltung FF wird die ausgewählte Kanalinformation mit einer Bitrate von z.B. 70 Mbit/s für Farb-TV, 625 Zeilen, oder von 280 Mbit/s für HDTV zum BB-Endgerät geleitet.

Für die Steuerung der Abtaststufenschaltung FF liefert der Zeitlagenselektor S, entsprechend der über das BB-Endgerät gewählten Kanalnummer, mithilfe der ihm ebenfalls zugeführten Synchrontakte si an die einzelnen Stufen der Abtaststufenschaltung FF die zugehörigen Signale. Dadurch wird in jeder Stufe von den zugeführten, von Stufe zu Stufe in ihrer Anzahl halbierten, dort jeweils äquidistanten Bits jedes zweite ausgeblendet, und von allen Stufen zumindest, von der letzten Stufe ausschließlich, die Folge übernommen, die der Zeitlage des gewählten Kanals entspricht.

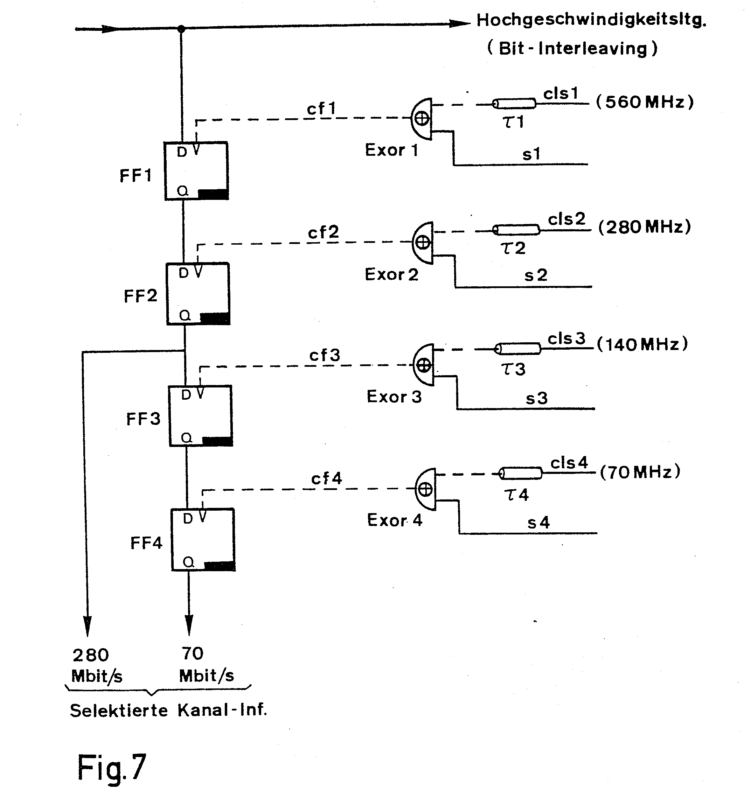

Das in Fig. 7 dargestellte Prinzipschaltbild läßt folgendes erkennen. Den Steuereingängen jeder Kippschaltung FF1, FF2, FF3, FF4 werden über ein jeweils betreffendes Gatter EXOR1, EXOR2, EXOR3, EXOR4 die zugehörigen Synchrontakte cls1, cls2, cls3, cls4 sowie die betreffenden Selektionssignale s1, s2, s3, s4 zugeführt. Laufzeitglieder $\tau 1$, $\tau 2$, $\tau 3$, $\tau 4$ in den Zuleitungen der Synchrontakte ermöglichen eine optimale Einstellung der Phasenlagen für die Eingangs- und Steuersignale an der betreffenden Kippschaltung FFi.

Die Selektionssignale si sind - jeweils entsprechend der gewählten Kanallage - entweder "high" oder "low", die Synchrontakte clsi hingegen mit der zugehörigen Frequenz periodisch "high" und "low". Damit ergibt sich am Ausgang eines Gatters EXORi für den Steuereingang einer Kippschaltung FFi als Clock-Signal cfi entsprechend der nachstehenden Tabelle:

| si | O | O | I | I | | L | L | H | H |
|------|---|---|---|---|------|---|---|---|---|
| clsi | O | I | O | I | bzw. | L | H | L | H |
| cfi | O | I | I | O | | L | H | H | L |

Dementsprechend kann am Ausgang der Abtaststufenschaltung FF beim gewählten Beispiel jede von 16 möglichen Zeitlagen erscheinen. Bei einer Gesamtbitrate von 1,12 Gbit/s auf der signalführenden Leitung bedeutet dies eine Selektion einer Kanalinformation mit der Bitrate 70 Mbit/s über die Zwischenstufen 560 Mbit/s, 280 Mbit/s und 140 Mbit/s. Im Falle eines Bewegtbildkanals mit höherer Auflösung (HDTV) kann die entsprechend höherratige selektierte Kanalinformation im allgemeinen ohne weiteres bereits nach der zweiten Stufe bei 280 Mbit/s entnommen werden.

Zur Realisierung ist anzumerken, daß für die Kippschaltung FF1 ein schnelles Flip-Flop der Fairchild-11C-Serie, z.B. F11C06, und für die folgenden Stufen FF2, FF3, FF4 ein Baustein F100131 eingesetzt werden kann. Die Gatter EXOR2, EXOR3, EXOR4 können mit dem Baustein F100107, das Gatter EXOR1 mit einer einfachen diskreten Schaltung in ECL, $E^2$CL, BCL-Technik oder ähnlich aufgebaut werden. Damit ergibt sich eine 3- bis 4-Chip-Lösung mit geringfügiger Zusatzbeschaltung. Der Leistungsverbrauch ist entsprechend gering und liegt bei etwa 1,5 W für einen solchen vierstufigen 1,12 Gbit/s-Kanalwähler für 16 Breitbandkanäle.

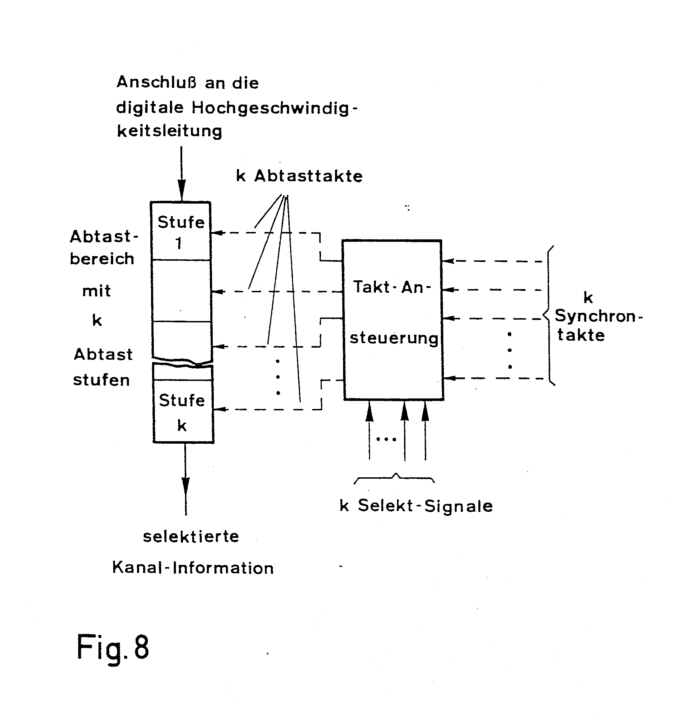

In Fig. 8 ist das eben erläuterte Prinzip in allgemeiner Form für k Abtaststufen dargestellt. Eine nähere Erläuterung ist damit an sich entbehrlich. Es sei lediglich nochmals erwähnt, daß hierbei die Gewinnung der auszuwählenden Kanalinformation, z.B. 70 Mbit/s, streng hierarchisch durch räumlich und zeitlich sequentielle Abtastung in mehreren Stufen mit Geschwindigkeitstransformation im Verhältnis 1:2 erfolgt.

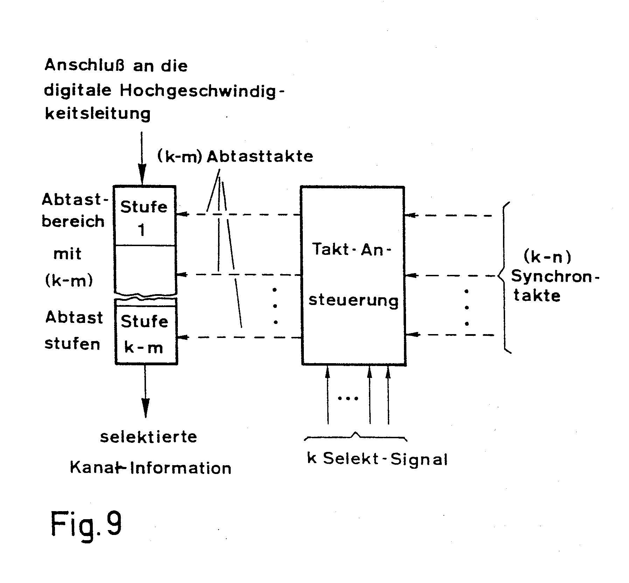

Besonders vorteilhaft sind solche Ausführungsformen der Erfindung, bei denen hierarchisch benachbarte Abtaststufen zusammengefaßt sind. Bei der Realisierung werden dann weniger Kippschaltungen, z.B. k-m mit m = 1, ..., k-1, benötigt. Dies ist in allgemeiner Form in Fig. 9 dargestellt. Dazu ist dann aber die Taktansteuerung zu modifizieren, die dann lediglich k-m Abtasttakte bereitstellt und dazu k-n Synchrontakte verwendet.

Der Vorteil solcher Lösungen liegt in der geringen Anzahl von Abtaststufen. Es wird allerdings erkauft mit in der Regel komplexeren Taktansteuerschaltungen. Gleichzeitig steigen die Anforderungen bezüglich der Ansteuerphasengenauigkeiten.

Ihre Realisierungsgrenze haben diese Lösungen daher dort, wo der Zuwachs an Komplexität der Taktansteuerung die Einsparung an Abtaststufen übersteigt bzw. wo die jeweils geforderte Phasengenauigkeit der Ansteuersignale nicht oder nur mit derart hohem Aufwand erreicht werden kann, daß der dadurch bedingte Hardware-Zuwachs die Vorteile übersteigt.

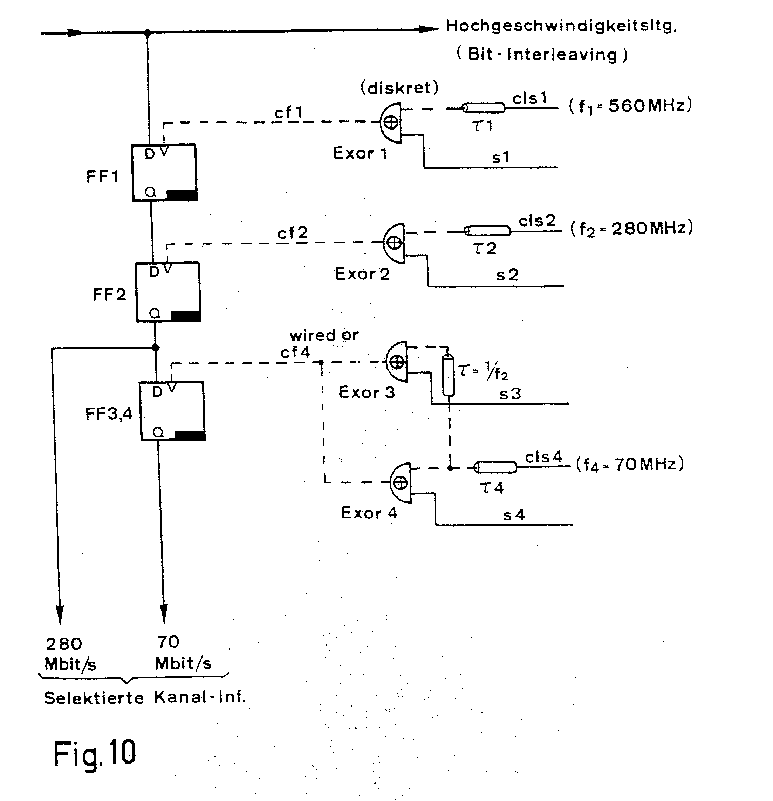

Die Fig.10 zeigt eine derartige Variante, bei der die beiden letzten Stufen zu einer Abtaststufe FF3,4 zusammengefaßt sind. Die zugehörige Ansteuerung braucht nach den bisherigen Ausführungen nicht näher erläutert zu werden und ist allein aus der Fig.10 zu entnehmen. Anstelle einer Anzapfung der Abtaststufenschaltung FF für die Selektion einer 280 Mbit/s-Kanalinformation hinter der zweiten Stufe FF2 kann diese Information auch am Endausgang für an sich 70 Mbit/s entnommen werden, wenn die Gatter EXOR3 und EXOR4 entsprechend angesteuert werden.

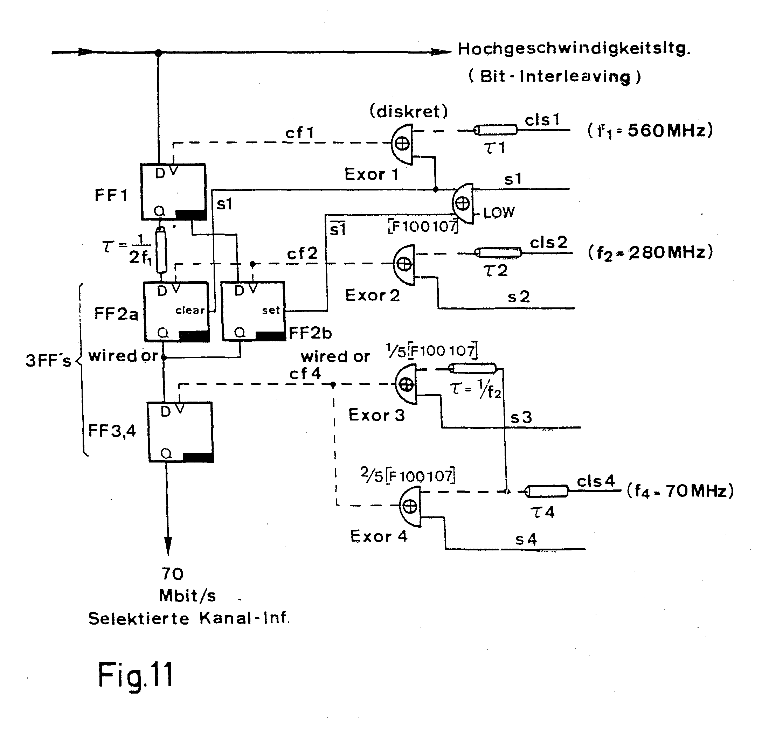

Im Zusammenhang mit der Zusammenfassung von Abtaststufen und der Einsparung von Kippschaltungen für diesen Zweck sowie der Realisierung mit handelsüblichen Bausteinen, z.B. F100131, die drei Kippschaltungen beinhalten, ergibt sich eine besonders interessante und vorteilhafte Ausführungsform der Erfindung, die in Fig. 11 dargestellt ist. Wie auch bei der Ausführungsform gemäß Fig.10 sind die beiden letzten Stufen in einer Kippschaltung FF3,4 zusammengefaßt, d.h. die dritte Stufe erscheint nicht als diskrete Stufe. Die Besonderheit dieser Ausführungsform betrifft die zweite Stufe. Da der verwendete Baustein hierfür noch zwei Kippschaltungen einzusetzen gestattet, werden diese als FF2a und FF2b an der Grenze ihrer Arbeitshöchstgeschwindigkeit mit optimal eingestellter Abtastphasenlage in Arbeitsteilung betrieben, zu deren Erläuterung nachfolgend etwas weiter ausgeholt wird.

Bei 1,12 Gbit/s auf der signalführenden Leitung hat ein einzelnes Bit die zeitliche Länge von etwa 0,9 ns. Hiervon entnimmt die erste Stufe - FF1, z.B. F11C06 - jedes zweite, wobei die Anstiegflanke des Clock-Pulses cf1 für FF1 ziemlich genau auf die Mitte der Bitdauer eingestellt wird. Am Ausgang der ersten Stufe FF1 entsteht damit ein Signal, das aus direkt aufeinanderfolgenden Bits von je 2 x 0,9 ns = 1,8 ns zeitlicher Länge gebildet ist. Diese sind nun von der zweiten Stufe zu verarbeiten, für die dieses Eingangssignal mit 560 MHz, entsprechend 1/1,8 ns, im Bereich der Arbeitshöchstgeschwindigkeit (300 MHz) des verwendeten Bausteins liegt. Die Clock-Frequenz der zweiten Stufe beträgt dazu nämlich 280 MHz. Auch hier soll die Anstiegflanke des Clock-Pulses cf2 auf die Mitte der zeitlichen Länge des abzutastenden Bits eingestellt werden.

Bezüglich der Phasenlagen der Clock-Pulse cfl und cf2 ergeben sich - je nach Kombination der Selektionssignale sl und s2 - zwei Möglichkeiten: entweder liegt ein Clock-Puls cf2 genau zwischen zwei Clock-Pulsen cfl oder sie haben die Phasendifferenz O. Das bedeutet für den Fall, daß der Clock-Puls cf2 optimal auf die zeitliche Länge des abzutastenden Signals, d.h. auf dessen Mitte, eingestellt ist, daß bei Umschaltung von sl und einem entsprechenden Versatz des Clock-Pulses cfl um 0,9 ns der Clock-Puls cf2 nun genau auf die Grenze zwischen zwei abzutastenden Bits trifft, hier also die denkbar ungünstigsten Voraussetzungen gibt.

Hiergegen wird nun bei der beschriebenen Ausführungsform der Erfindung Abhilfe durch Arbeitsteilung zwischen den beiden Kippschaltungen FF2a und FF2b geschaffen, von denen immer eine der beiden gerade dann die optimalen Voraussetzungen bietet, wenn die andere die ungünstigsten Voraussetzungen gibt. Diesen beiden Kippschaltungen FF2a, FF2b werden von der ersten Stufe die zu verarbeitenden Signale jeweils um 0,9 ns gegeneinander verschoben zugeführt. Dazu dient ein Laufzeitglied $\tau$ in der Signalzuleitung zu der einen der beiden Kippschaltungen, im dargestellten Beispiel bei FF2a. Beiden Kippschaltungen FF2a und FF2b wird derselbe Clock-Puls cf2 zugeführt. Das heißt nun aber, sind die Verhältnisse für die Abtastung z.B. bei der Kippschaltung FF2a schlecht, so sind sie bei der Kippschaltung FF2b optimal und umgekehrt. Dementsprechend werden zudem nach den set/clear-Eingängen der Kippschaltungen FF2a und FF2b von der Ansteuerung der ersten Stufe FF1 her die Signale sl, $\overline{sl}$ zugeführt, das heißt, nur die Kippschaltung FF2a oder FF2b, die unter den jeweils gegebenen Bedingungen die Abtastung optimal durchführen kann, wird freigeschaltet, die andere Kippschaltung, FF2b oder FF2a, wird zur selben Zeit gesperrt.

Im Zusammenhang mit dieser Ausführungsform der Erfindung ist noch eine weitere Ausnutzung von Logikelementen, die in einem Baustein enthalten sind, zu erwähnen. Z.B. enthält ein Baustein F100107 insgesamt 5 Gatter, von denen für die Ansteuerung der Abtaststufen jedoch nur vier benötigt werden. Das fünfte Gatter kann nun z.B. für die Laufzeitverzögerung eines Signals verwendet werden, d.h. zumindest teilweise an die Stelle einer Verzögerungsleitung treten. Bei der in Fig. 11 dargestellten Ausführungsform kann dies zweckmäßig beim Laufzeitglied $\tau$ in der Zuleitung des Synchrontaktes cls4 zum Gatter EXOR3 realisiert werden.

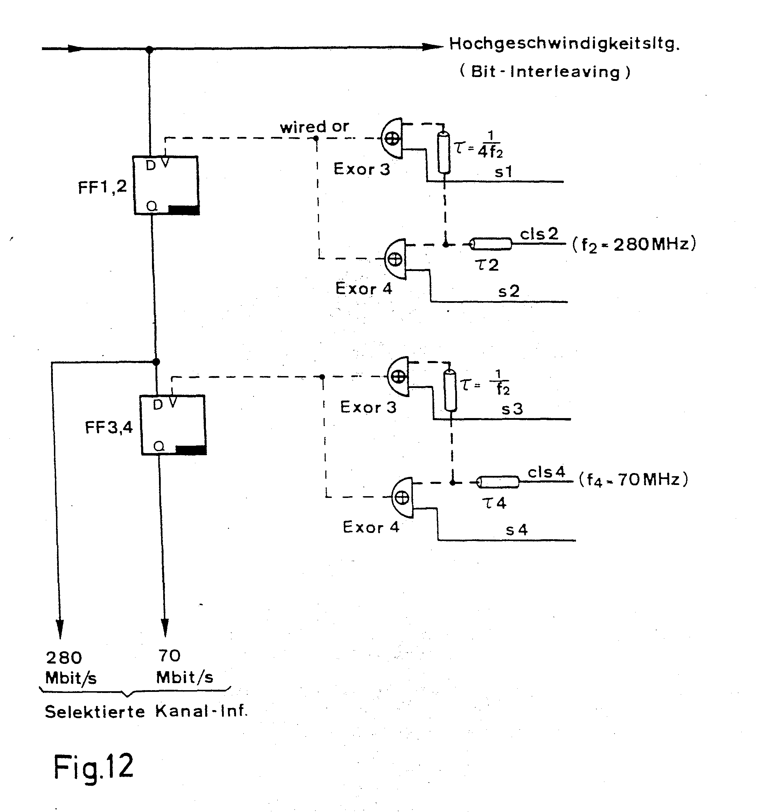

Bei der in Fig. 12 dargestellten Ausführungsform der Erfindung sind für eine 1:16-Teilung die Stufen 1 und 2 sowie 3 und 4 in jeweils einer Kippschaltung FF1,2 bzw. FF3,4 zusammengefaßt. Gegenüber den bisherigen Erläuterungen sind hierzu keine ergänzenden Angaben nötig.

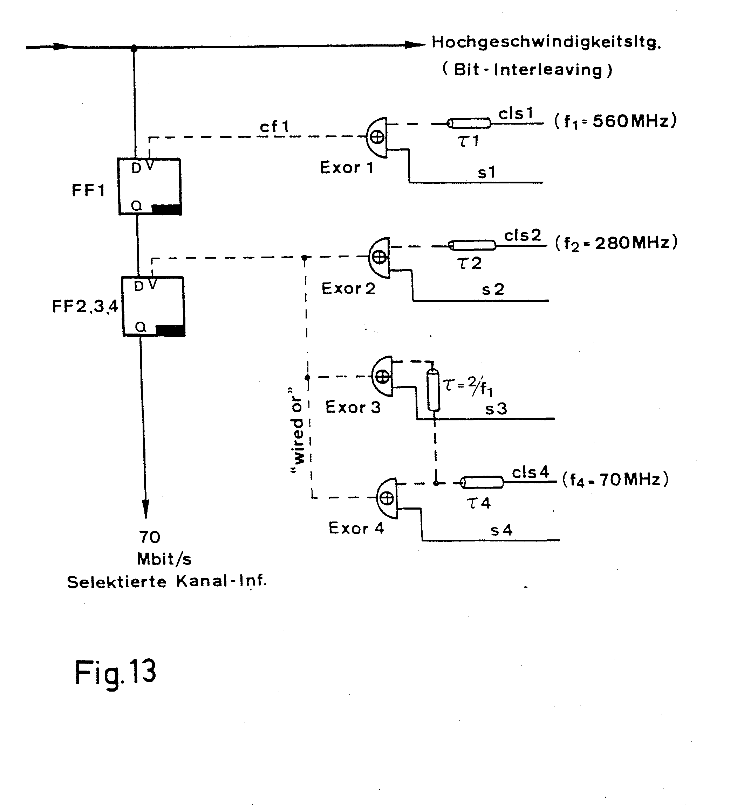

Ähnliches gilt für die in Fig. 13 dargestellte Variante, bei der die 1:16-Teilung mit einer ersten Stufe FF1 sowie mit einer weiteren, zusammengefaßten Stufe FF2,3,4 herbeigeführt wird. Hierbei können allerdings nur Datenströme mit 560 Mbit/s und 70 Mbit/s entnommen werden.

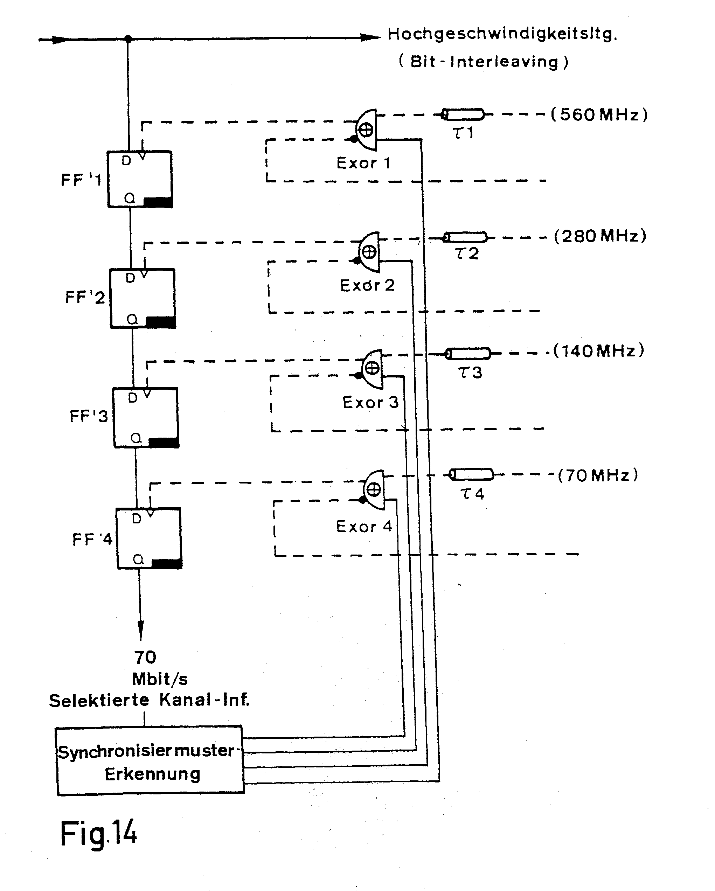

Wie bereits anfänglich schon erwähnt, werden für die Ansteuerung der Abtaststufenschaltung verschiedene Taktsignale benötigt. Im Zusammenhang mit Fig. 3, die den Aufbau und die Organisation eines Multiplexrahmens zeigt, und den zugehörigen Erläuterungen sind das Vorhandensein und die Bedeutung eines Synchronisierkanals bereits angesprochen worden. Auf dieser Grundlage kann bei Ausführungsformen der Erfindung eine modifizierte Variante eines Kanalwählers für die Ableitung der Synchrontakte vorgesehen werden, wie sie z.B. in Fig.14 dargestellt ist. Diese besteht im wesentlichen aus einer Kanalwäherschaltung in der bereits beschriebenen Art. An ihren Ausgang ist ein Detektor für das Synchronisiermuster angeschlossen. Dieser erkennt und überwacht fortlaufend die im Kanal befindlichen Synchronisierkriterien und stellt den Synchronismus für die Kanalwählerschaltung her bzw. erhält diesen aufrecht. Von ihr werden auch die Steuersignale, die die Funktion der Selektionssignale übernehmen, abgeleitet.

Lag beispielsweise zum Zeitpunkt $t_o$ die Steuerinformation: $(sl, ..., sk)^{to}$ vor und wurde das Synchronisiermuster auf der signalführenden Leitung nicht gefunden, so wird die Steuerinformation geändert, so daß $(sl, ..., sk)^{to} \neq (sl, ..., sk)^{to+1}$ ist.

Würde zu einem Zeitpunkt $t_x$ Synchronismus erreicht, bleibt $(sl, ..., sk)$ unverändert, solange die fortlaufende Synchronisiermustererkennung positiv ausfällt.

Die Ansteuertakte dieses speziellen Synchronisierkanalselektors sind die sogenannten Synchrontakte. Sie können entweder direkt oder beispielsweise über entsprechende Verstärker, gegebenenfalls mit Invertierung, Takttreiber oder dergleichen zur Verfügung gestellt werden und dienen auf diese Weise insbesondere zum Betrieb der Kanalwählerschaltungen.

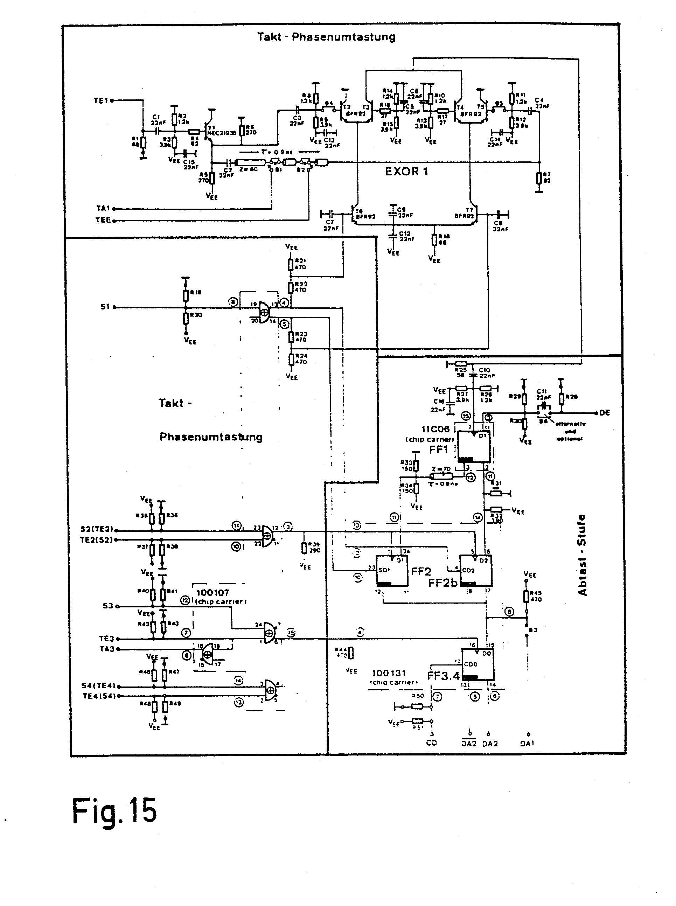

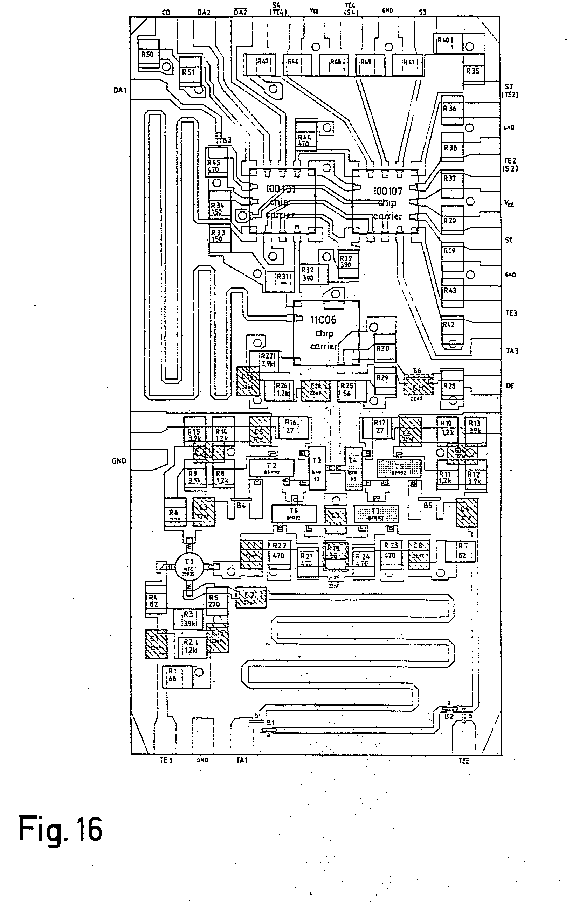

Fig. 15 zeigt ein vollständiges Schaltbild für eine Kanalwählerschaltung, die an eine signalführende Leitung mit 1,12 Gbit/s angeschlossen wird und deren prinzipielle Wirkungsweise im Zusammenhang mit Fig. 11 erläutert wurde. In Fig.16 ist hierfür das Layout und der Bestückungsplan für eine Realisierung in Dickfilmtechnik, Originalgröße 5,08 x 2,54 cm (2 x 1 Zoll), dargestellt.

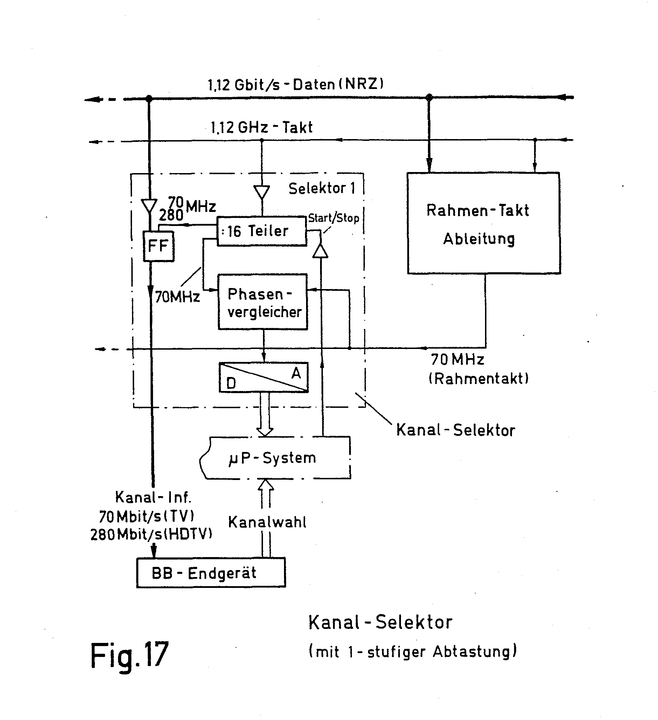

Dasselbe Grundprinzip erfindungsgemäßer Kanalselektoren (vgl. Fig. 5) wird mit einer Schaltung gemäß Fig. 17 auf folgende Art gelöst:

Der Modul - Kanalselektor - besteht im wesentlichen aus zwei Elementen,

- einer Abtaststufe, in die die gewünschte Information aus dem bitseriell verschachtelten Bitstrom im 70- bzw. für HDTV im 280 MHz Takt übernommen und an deren Ausgang dann unmittelbar der auszuwählende 70- bzw. 280 Mbit/s-Bitstrom für das BB-Endgerät zur Verfügung steht und

- einem Abtastzeitpunkt-Generator mit einem Teiler und einem Phasenvergleicher, mit dem - bezogen auf den in ähnlicher Weise ableitbaren 70 MHz Rahmentakt und abhängig von der zeitlichen Lage des auszuwählenden Kanals - der entsprechend zeitlich versetzte Abtasttakt für die Abtaststufe erzeugt wird.

Wie Fig. 17 zeigt, kann die Abtaststufe aus einem D-Flip-Flop FF bestehen; ein derartiges Element ist für die vorliegenden Geschwindigkeitsanforderungen bereits derzeit in integrierter Form auf dem Markt.

Die Schwierigkeit, im Gbit/s-Bereich einen Abtastzeitpunkt-Generator zu realisieren, wird bei dieser Ausführungsform der Erfindung in einer Weise gelöst, die den besonderen Bedingungen dieses Bitratenbereichs angepaßt und aufwandsarm ist.

Bei der Erprobung der prinzipiellen Arbeitsweise wurde deutlich, daß bereits mit heute verfügbarer Technologie der Platz- und Leistungsbedarf für einen Kanalselektor-Modul durchaus akzeptabel ist. Sein Leistungsverbrauch liegt bei ca. 1,5 W; der Platzbedarf entspricht etwa dem einer halben Europakarte. Bei Einsatz funktionsspezifischer integrierter Bauelemente lassen sich diese Werte deutlich reduzieren.

Die prinzipielle Funktionsweise dieser "stochastischen" Kanalwähler-Ausführungsform ist bereits weiter vorn schon beschrieben. An dieser Stelle soll hierzu nur nochmals darauf hingewiesen werden, daß trotz der größeren Zahl von Versuchen, die gewünschte Zeitlage zu treffen, d.h. den angewählten Kanal zu finden, dafür ausreichend kurze Zeit benötigt wird, die der Teilnehmer nicht wahrnehmen kann.

Ausführungsformen der Erfindung können folgendermaßen aufgebaut sein:

D-Flip-Flop (FF):
Da die Clock-Frequenz des D-Flip-Flops um den Faktor $2^n$ unter der Bitfolgefrequenz liegt, kann auch bei Clb = 1,12 GHz ein erhältliches schnelles D-Flip-Flop (Fairchild 11C06) verwendet werden. Eine weitere Möglichkeit besteht im Einsatz eines aus diskreten Elementen aufgebauten Flip-Flops, das bei 1,3 V Versorgungsspannung arbeitet und besonders leistungsarm ist.

Frequenzteiler ( :16 Teiler):
Der Frequenzteiler kann aus einem erhältlichen Teiler 1:4 (Fairchild 11CO5) aufgebaut werden, dem dann zwei Flip-Flops üblicher Geschwindigkeit nachgeschaltet werden.

Phasenmesser (Phasenvergleicher):
Der Phasenmesser kann entweder mit Double Balanced Mixern oder mit Gattern aufgebaut werden. Da bei beiden Arten die Phasenanzeige doppeldeutig ist, empfiehlt sich der Einsatz von zwei Phasenmessern mit um 90° versetzter Ansteuerung durch den Referenztakt. Es kann aber auch eine Verzögerungsleitung oder auch ein zusätzlicher Phasenschieber vorgesehen werden.

Steuerung (µP-System):
Die Steuerung zur Einstellung der richtigen Zeitlage kann mittels eines, in der Breitband-Teilnehmeranschlußeinrichtung ohnehin erforderlichen Mikrocomputers erfolgen, in den die Ergebnisse der Phasenmessungen über einen Multiplex-A/D-Wandler übertragen werden. Die Feststellung, ob die richtige Zeitlage erreicht ist, kann die Steuerung (µP-System) durch Vergleich der digitalisierten Phasenmeßspannungen mit entsprechenden Zuordnungen in einer Look-Up-Table durchführen. Dabei kann sichergestellt werden, daß Toleranzen der Phasenmessungen durch die Breite der jeweiligen Zuordnungsbereiche berücksichtigt werden.

Rahmensynchronisation (Rahmen-Takt Ableitung):
Eine der Zeitlagen (s. z.B. Fig. 3 und betreffende
Beschreibung) kann zur Rahmensynchronisation verwendet
werden. Hierfür läßt sich der beschriebene Flip-Flop-
Frequenzteiler-Modul und das erwähnte Steuerungsverfahren prinzipiell ebenfalls einsetzen. In diesem Fall
zeigt jedoch nicht eine Phasenmessung, sondern das
Auffinden des gewählten Sync.-Wortes das Erreichen der
richtigen Zeitlage an.

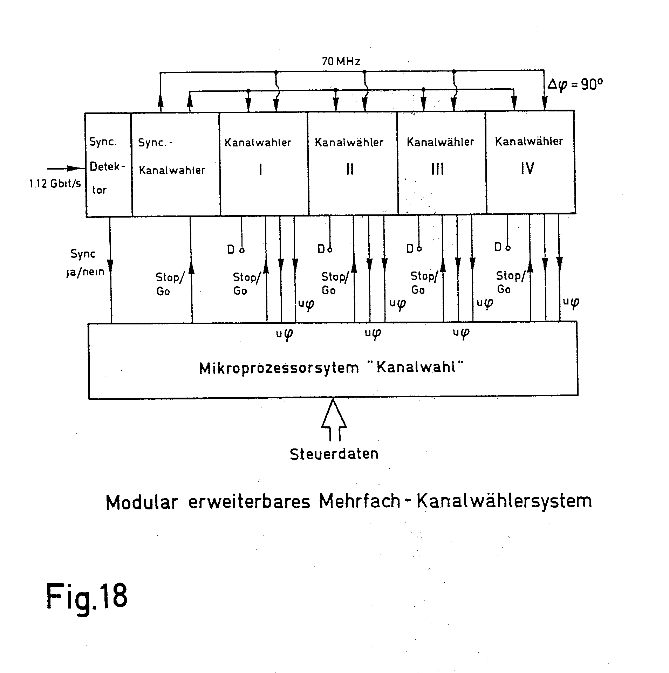

Modularisierung:
Die Anordnung Flip-Flop, Frequenzteiler, Phasenmesser
ist als Modul anzusehen, der jeweils einem BB-, d.h.
Bewegtbild- oder Breitband-Endgerät 1 des Teilnehmers
zugeordnet wird. Je nach den Wünschen des Teilnehmers
kann somit die Teilnehmeranschlußeinrichtung für die
gewünschte Zahl von Endgeräten ausgerüstet werden.
(s.a. Fig. 18).

Umschaltung der Kanalkapazität:
Unter der Voraussetzung, daß die Verschachtelung der
Kanäle in geeigneter Weise erfolgt, beispielsweise wie
in Fig. 3 angegeben, kann durch Umschalten der Clock-
Frequenz des Flip-Flops FF die Bitrate eines Kanals um
den Faktor 2 oder 4 (HDTV) heraufgesetzt werden. Dazu
sind die entsprechenden Ausgänge der Teilerkette zugänglich zu machen.

Modulintegration:
Der genannte Modul, für dessen Ansteuerung nur relativ
wenige Leitungen benötigt werden, bietet sich zur Realisierung in integrierter Form an. Auch die Anzahl der
erforderlichen Funktionen läßt dies möglich erscheinen. Auf diese Weise kann der Aufwand in der Teilnehmeranschlußeinrichtung weiter reduziert werden.

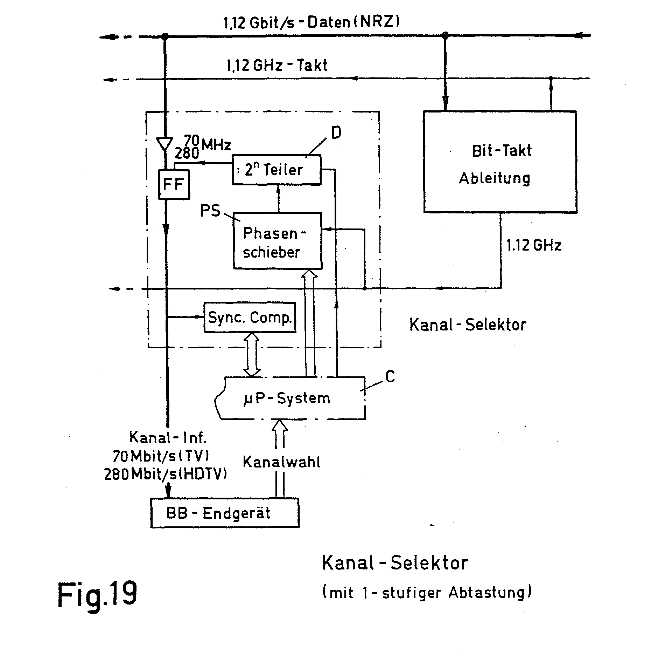

Eine weitere Ausbildung entsprechend dem Grundprinzip erfindungsgemäßer Kanalselektoren ist in Fig. 19 dargestellt:

Der Modul - Kanalselektor - besteht hierbei im wesentlichen aus drei spezifisch ausgebildeten Elementen,
- einer Abtaststufe FF, in die die gewünschte Information aus dem bitseriell verschachtelten Bitstrom im 70- bzw. für HDTV im 280 MHz Takt übernommen und an deren Ausgang dann unmittelbar der auszuwählende 70- bzw. 280 Mbit/s-Bitstrom für das BB-Endgerät zur Verfügung steht,
- einem Frequenzteiler D mit einem Teilerverhältnis $1 : 2^n$, im vorliegenden Fall vorzugsweise $1 : 4$ oder $1 : 16$, bei dem sich das Eingangssignal und entsprechend auch das Ausgangssignal zeitlich verschieben läßt, und
- einem Phasenschieber PS, der eine kontinuierliche, unbegrenzte Phasenverstellung in sich überlappenden Schritten ermöglicht und auf diese Weise den ihm zugeführten Bittakt Clb zeitlich im erforderlichen Umfang verschoben an den Frequenzteiler D weiterleitet.

- 29 -

Außerdem ist ein Synchronisierzeichenvergleicher Sync.-COMP vorhanden, mit dessen Hilfe eine fest vorgegebene Zeitlage im Multiplexrahmen, gemäß Fig. 3 also der Kanal mit der Nummer O, ermittelt wird. Diese Zeitlage dient im allgemeinen als Ausgangslage zur Einstellung eines gewählten Kanals. Für die ordnungsgemäße Einstellung, sowohl zum Auffinden der Ausgangslage als auch zur Einstellung eines gewählten Kanals, sorgt eine Steuerung C.

Zunächst sollen Aufbau und Funktion der spezifischen Elemente dieser Kanalwählerschaltung näher erläutert werden.

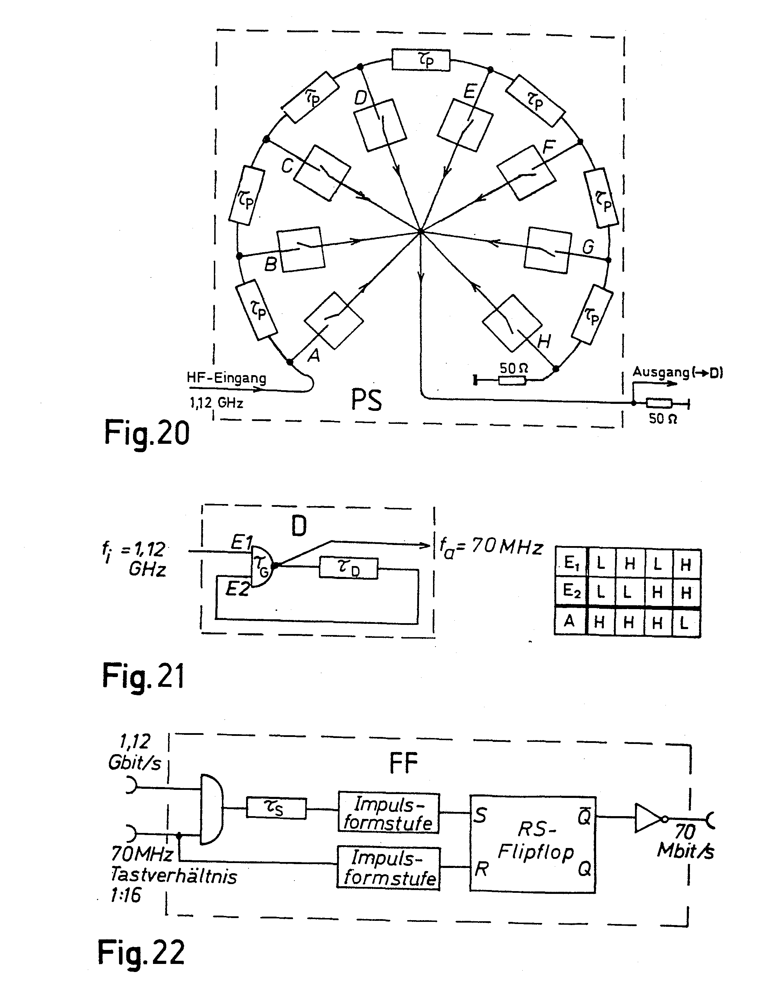

Fig.20 zeigt ein Prinzipschaltbild für den Phasenschieber PS. Es ist erforderlich, daß mit diesem Phasenschieber PS Phasenverstellungen ohne Begrenzung, d.h. um mehr als nur 360°, durchgeführt werden können. Er soll außerdem nur für eine feste Frequenz, hier 1,12 GHz entsprechend dem Bittakt Clb, eingesetzt werden und hat die Aufgabe, den Zeitpunkt, zu dem der nachfolgende Frequenzteiler D sein Ausgangssignal abgibt, zu verschieben. Da der Frequenzteiler D zeitliche Verschiebungen um volle 1,12 GHz-Perioden aber nur dann sicher ausführen kann, wenn dies in Teilschritten geschieht, ist der Phasenschieber PS aus mehreren in Reihe geschalteten Laufzeitgliedern $T_p$ aufgebaut. Schalter A, ..., H, die sternförmig von den Verbindungspunkten zwischen je zwei Laufzeitgliedern zu einem zentralen Ausgang des Phasenschiebers PS führen, ermöglichen Verschiebungen in solchen Teilschritten. Wichtig dabei ist, daß sich die Schließzeiten nacheinander zu betätigender Schalter A, ..., H immer kurzzeitig überlappen.

Das am Eingang eingespeiste HF-Signal wird nur dann zum zentralen Ausgang übertragen, wenn mindestens einer der Schalter A, ..., H geschlossen ist. Eine Phasenverschiebung entsteht, wenn von einem Schalter auf einen anderen umgeschaltet wird. Dies ist übrigens in beiden Richtungen möglich!

Die Anzahl der Teilschritte für eine volle 1,12 GHz-Periode muß, um den nachfolgenden Frequenzteiler D sicher verstellen zu können, größer als vier sein. Bei bevorzugten Ausführungsformen der Erfindung werden jedoch acht Teilschritte vorgesehen. Auf diese Weise ist nämlich noch eine zusätzliche Feineinstellung des Abtastzeitpunktes eines 1,12 Gbit/s-Signals möglich, die weiter unten näher erläutert wird. Für eine solche Feineinstellung wären vier Teilschritte pro 1,12 GHz-Periode zu wenig, mehr als acht Teilschritte hingegen nicht mehr sinnvoll.

Der Phasenschieber PS weist vorteilhaft zyklisch nacheinander einschaltbare Phasenverstellschritte auf. Die Phasenverstell- bzw. Teilschritte eines Zyklus entsprechen der Dauer einer vollen 1,12 GHz-Periode. Für die hier vorgesehenen Zwecke wäre eine Kette mit je z.B. acht Teilschritten pro Zyklus und einer maximal erforderliche Verschiebung um 15 Bit je 0,893 ns Dauer zu aufwendig. Die erwähnten acht Phasenverstellschritte pro 1,12 GHz-Periodendauer entsprechen je 45° Phasenverschiebung.

Damit der vom Phasenschieber PS angesteuerte Frequenzteiler D sicher um mehr als eine 1,12 GHz-Periode verstellt werden kann, müssen die Teilschritte des Phasenschiebers PS mehrmals in zyklischer Folge durchlaufen werden können. Das heißt aber auch, das Steuersignal für den Phasenschieber PS für 360° und 0° Phasenverschiebung muß dasselbe sein. Eine Veränderung der Phasenlagen erfolgt auf folgende Weise: Angenommen, der Schalter A ist geschlossen. Dann gelangt das zugeführte HF-Signal ohne Verzögerung - Laufzeiten innerhalb eines Schalters und der betreffenden Zuleitungen sollen hierbei vernachlässigbar sein - direkt zum Ausgang des Phasenschiebers PS. Zur Vermeidung von Signalunterbrechungen ist der nächste Schalter, hier Schalter B, hinzuzuschalten, bevor der Schalter A geöffnet wird. Das über das erste Laufzeitglied $\tau_p$ und den Schalter B zum Ausgang gelangende Signal ist - entsprechend 1/8 einer vollen 1,12 GHz-Periode - um 111,6 ps gegenüber dem über den Schalter A laufenden Signal verzögert. Während der sich überlappenden Schließzeiten der Schalter A und B stellt sich ein Zwischenwert, d.h. eine Phasenverschiebung um ca. 22,5° bzw. eine mittlere Laufzeitverschiebung um ca. 56 ps, ein. Damit sich der Frequenzteiler D sicher auf seinen neuen Arbeitszeitpunkt einstellen kann, sollte für eine Verstellung der Phasenlage um je 45° etwa 1 $\mu$s vorgesehen werden (Verstellfrequenz also etwa 1 MHz).

Nach kontinuierlichem Weiterschalten bis zum Schalter H hat sich somit eine Phasenverschiebung um insgesamt 315° ergeben. Zwischen dem Schalter H und dem Schalter A befindet sich kein Laufzeitglied. Wird nun der Schalter A geschlossen, bevor der Schalter H öffnet, stellt sich am Ausgang des Phasenschiebers PS die Zwischenlage von ca. $337,5^O$ Phasenverschiebung ein. Nach Öffnen des Schalters H ergeben sich über den geschlossenen Schalter A $360^O$ Phasenverschiebung. Durch Weiterschalten der Schalter A. B, ... H, A, ... in der angegebenen Weise lassen sich also Phasenverschiebungen erreichen, mit denen auch gleichzeitig das ansteigende Ausgangssignal des nachfolgenden Frequenzteilers D zeitlich verschoben wird.

Für das spezielle Anwendungsgebiet der Erfindung mit 16 bitweise in einem Multiplexrahmen verschachtelten Kanälen eines Systems mit einer Gesamtbitrate von 1,12 Gbit/s kann, ausgehend von einem beliebigen dieser 16 Kanäle, jeder andere durch maximal acht "Umläufe" des Phasenschiebers PS in der einen oder der anderen Richtung erreicht werden. Es werden hier also maximal nur $8 \times 360^O$ vom Phasenschieber PS entsprechend einer Zeitverschiebung beim Frequenzteiler D um $8 \times 0,893$ ns = 7,144 ns benötigt. Eine solche Verstellung erfordert mit der oben genannten Verstellfrequenz von 1 MHz pro $45^O$ also maximal 64 $\mu$s.

Hinsichtlich der bereits erwähnten Feineinstellung ist es bei Kanalwählerschaltungen der hier betrachteten Art wichtig, daß das D-Flip-Flop FF zeitlich möglichst genau bzw. gut auf das abzutastende Signal des 1,12 Gbit/s-Datenstroms abgestimmt werden kann. Günstig hierzu ist die Datenbitmitte. Signallaufzeittoleranzen und -änderungen können dann kompensiert werden.

Von den einzelnen, innerhalb einer vollen 1,12 GHz-Periode im Phasenschieber PS einstellbaren Phasenlagen entfällt etwa eine Hälfte der Positionen auf die Flankenbereiche eines Datenbit, die andere Hälfte auf dessen Dachbereich. Zum Auffinden einer optimalen Abtastposition wird der Phasenschieber PS von der aktuellen Position aus nach beiden Seiten so weit verstellt, bis dort die Abtastung nicht mehr sicher erfolgt. Diese beiden Positionen werden registriert; die zwischen diesen beiden Positionen, z.B. mit mindestens je einer Position als Sicherheitsabstand befindlichen Positionen, sind optimal und können als Ergebnis der Feineinstellung automatisch bestimmt und als Ausgangslage für nachfolgende Kanalwahlverstellungen verwendet werden.

In entsprechender Weise läßt sich auch eine Überwachung während des Betriebes durchführen.

Die Fig.21 zeigt das Prinzipschaltbild eines digitalen $1 : 2^n$ Frequenzteilers D, wie er bei bevorzugten Ausführungsformen der Erfindung zum Einsatz kommt. Er ist einfach aufzubauen, besonders leistungsarm und teilt die Eingangsfrequenz von 1,12 GHz in ein niederfrequenteres Taktsignal mit steilen Flanken, d.h. er erzeugt aus dem Bittakt Clb den Multiplextakt Clm.

Die Schaltung eines solchen Frequenzteilers D erfordert nur ein NAND-Gatter und eine Verzögerungsleitung $\tau_D$. Soll z.B. nur ein 70 MHz Taktsignal Clm erzeugt werden, muß die Verzögerungsleitung $\tau_D$ entsprechend

$$f_{eigen} = \frac{1}{2\,(\tau_G + \tau_D)}$$

gewählt werden. Werden, z.B. für HDTV-Kanäle, Multiplex-Taktsignale Clm von 280 MHz oder auch 140 MHz benötigt, sind entweder entsprechend kürzere Verzögerungsleitungen $\tau_D$ oder umschaltbare Abgriffe an der langen

- 34 -

Verzögerungsleitung vorzusehen.

Dieser Frequenzteiler D arbeitet auf folgende Weise:

Liegt am Eingang $E_2$ des NAND-Gatters ein Signal im L-Zustand, so wird von einem Wechsel des 1,12 GHz-Signals am Eingang $E_1$ in den L-Zustand der Ausgang nach der Gatterlaufzeit $\tau_G$ in den H-Zustand geschaltet. Das 1,12 GHz-Signal kann jetzt den Zustand des Gatters nicht beeinflussen. Der H-Zustand vom Gatterausgang erreicht, um $\tau_D$ verzögert, den Eingang $E_2$. Mit der nächsten ansteigenden Flanke des 1,12 GHz-Signals am Eingang $E_1$ wird der Ausgang des Gatters in den L-Zustand geschaltet. Damit am Gatterausgang ein echter L-Zustand erhalten bleibt, müssen die 1,12 GHz-Schwingungen im Gatter unterdrückt werden. Nach der Laufzeit $\tau_D$ erreicht dann wieder der L-Zustand den Eingang $E_2$ des NAND-Gatters, womit der nächste Umschaltvorgang eingeleitet wird.

Die Unterdrückung des 1,12 GHz-Signals im NAND-Gatter ist zwar nur für den Fall erforderlich, in dem am Eingang $E_2$ der H-Zustand anliegt. Sie würde jedoch im anderen Fall nicht schaden, in dem sich der Eingang $E_2$ im L-Zustand befindet und das 1.12 GHz-Signal den Zustand des NAND-Gatters nicht beeinflußt. Realisiert wird eine solche Unterdrückung bei Ausführungsformen der Erfindung zweckmäßig mit einer ausgangsseitig offenen $\lambda/4$-Stichleitung. Diese wirkt auf ein Signal der Wellenlänge $\lambda$ wie ein Kurzschluß.

Dieser Frequenzteiler schwingt selbständig mit seiner Eigenfrequenz $f_{eigen}$, wenn am Eingang $E_1$ statt des 1,12 GHz-Signals ein Signal im H-Zustand anliegt. Das - vom Phasenschieber PS angelieferte - 1,12 GHz-Eingangssignal synchronisiert den Frequenzteiler D, d.h. bei einer Phasen- bzw. Laufzeitänderung mittels Phasenschieber PS wird eine Periodendauer des Frequenzteilers D verlängert bzw. verkürzt, so daß - wie gewünscht - die künftigen Perioden entsprechend später bzw. früher beginnen.

Das dritte spezifische Element dieses Kanalwählers ist die Abtaststufe FF, für die die Fig.22 das Prinzipschaltbild zeigt. Es handelt sich dabei um einen aus einzelnen Bauelementen aufgebauten Schaltkreis mit einem RS-Flip-Flop, einem AND-Gatter, einem Laufzeitglied $\tau_S$ und gegebenenfalls zwei Impulsformstufen.

Die Abtaststufe FF wird durch einen positiven, ca. 0,9 ns breiten Impuls gesteuert, der periodisch im Multiplextakt Clm, z.B. 70 MHz oder für HDTV 280 MHz, vom Frequenzteiler D angeliefert wird und auf den Reset-Eingang R des Flip-Flops gelangt. Damit wird periodisch im Multiplextakt Clm für einen L-Zustand am Q-Ausgang gesorgt. Dieser Zustand bleibt erhalten, solange am Set-Eingang S kein Signal im H-Zustand ansteht. Durch das AND-Gatter kann aber nur dann ein positiver Set-Impuls erzeugt werden, wenn zum Zeitpunkt des Steuerimpulses am AND-Gatter-Eingang ein 1,12 Gbit/s-Datenbit im H-Zustand anliegt. Ein solcher Set-Impuls sorgt für einen L-Zustand am Q-Ausgang.

Würden Set- und Reset-Impulse gleichzeitig an den Flip-Flop-Eingängen anstehen, könnte die Kippschaltung keinen definierten Zustand annehmen. Aus diesem Grunde wird der Set-Impuls gegenüber dem Reset-Impuls mit ei-

nem Verzögerungsglied $\tau_S$ zeitlich verzögert. Damit ist der später anstehende Impuls für den Flip-Flop-Zustand in jeder Multiplextaktperiode entscheidend.

Wird durch den Steuerimpuls ein positives 1,12 Gbit/s-Datenbit detektiert, so wechselt der $\overline{Q}$-Ausgang für die Dauer einer Multiplextaktperiode in den L-Zustand und der Q-Ausgang in den H-Zustand.

Der Q-Ausgang kann also während einer Multiplextaktperiode zwei Zustände annehmen, der $\overline{Q}$-Ausgang aber nur einen. Deshalb werden nur die Daten des $\overline{Q}$-Ausganges weiterverarbeitet, insbesondere über einen invertierenden Verstärker geführt.

Mit den Impulsformstufen wird für eine Verbreiterung der nur ca. 0,9 ns langen Impulse auf etwa 1,1 ns gesorgt, die das RS-Flip-Flop in seiner hier vorliegenden Realisierung benötigt. Die Impulsformstufen können also entfallen, wenn bei einer anderen Realisierungsform des RS-Flip-Flops ca. 0,9 ns breite Impulse ausreichen.

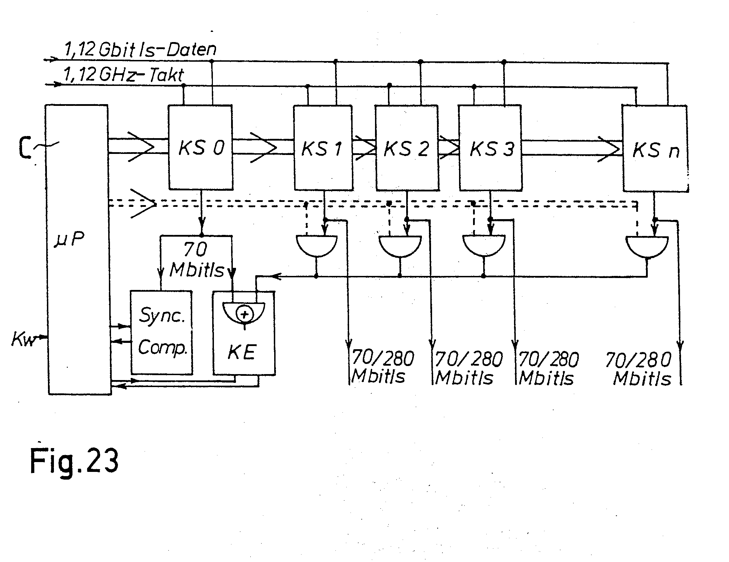

Die Fig.23 zeigt ein Blockschaltbild für dieses modular erweiterbare Kanalwählersystem. Bei den bisher erläuterten Ausführungsformen dieses Moduls wurde der Einfachheit halber davon ausgegangen, daß aus dem 1,12 Gbit/s-Datenstrom am Ort eines Teilnehmers nur ein Kanal, z.B. mit 70 Mbit/s detektiert wird. An sich sind aber solche Anwendungsfälle, bei denen örtlich konzentriert mehrere Breitband-Endgeräte betrieben werden, sehr häufig oder gar die Regel. Hierfür ist dieses modular erweiterbare Kanalwählersystem vorgesehen. Es soll anhand der Beschreibung der Steuer- und Überwachungsfunktionen, die damit möglich sind, näher erläutert werden:

Ein Teilnehmer eines Breitbandinformationssystems erwartet auf Knopfdruck einer zugehörigen Bedienungstastatur die von ihm gewünschte Information, z.B. ein Fernsehprogramm. Dieser Teilnehmerwunsch wird als eine Kanalwahlinformation Kw von der Steuerung C, einem Mikroprozessor µP entgegengenommen.

Zunächst, d.h. bei Inbetriebsetzung des Kanalwählersystems, muß die Ausgangslage bestimmt werden, von der aus dann der gewählte Kanal aufgesucht wird. Die Ausgangslage ist die Zeitlage des Kanals Nr. 0 - vgl. Fig. 3 - der, zumindest teilweise, mit dem Synchronisierdatenmuster belegt ist. Über einen Steuerbus wird von der Mikroprozessor-Steuerung C dazu einer der Kanalselektoren KS, hier also der Kanalselektor KSO, über den Synchronisierzeichenvergleicher Sync.-COMP auf das Synchronisierdatenmuster des seriellen Eingangsdatenstromes gesteuert. Solange das Synchronisierdatenmuster noch nicht erkannt wurde, veranlaßt die Steuerung C den Kanalselektor KSO durch schrittweise, sich überlappende Phasenverschiebungen andere Zeitlagen des seriellen Datenstromes zu untersuchen.

Nachdem das Synchronisierzeichen, d.h. die Zeitlage des Kanals Nr. 0, erkannt worden ist, erfolgt die Feinabstimmung des Abtastzeitpunktes für ein Datenbit des 1,12 Gbit/s-Datensignals im Kanalselektor KSO. Die Einzelheiten dieser Funktion sind im Zusammenhang mit der Beschreibung des Phasenschiebers PS bereits erläutert. Damit ist der Kanalselektor KSO als Kanalwähler für den Synchronisierkanal optimal eingestellt. Er liefert die Ausgangslage für die Einstellung eines durch die Kanalwahlinformation Kw gewählten Kanals.

Eine solche Einstellung läuft beispielsweise wie folgt ab. Dem in Betrieb gesetzten Breitband-Endgerät des Teilnehmers sei der Kanalselektor KS 1 zugeordnet. Dieser wird nun über den Steuerbus von der Steuerung C zunächst auf den Synchronisierkanal eingestellt, d.h. in die vom Kanalselektor KSO bereits aufgefundene Ausgangslage gebracht. Hierzu dient eine Kanalüberwachungsschaltung K-COMP, die aus einem EX-OR-Gatter und einem Register aufgebaut ist. Von der Steuerung C werden die Ausgänge der Kanalselektoren KSO und KS 1 auf die Eingänge des EX-OR-Gatter geschaltet. Dadurch werden mögliche Datenbitabweichungen als Fehler registriert und eventuell erforderliche unterschiedliche Abtastpositionen bei der Feineinstellung des Kanalselektors KS 1 gegenüber der des Kanalselektors KSO veranlaßt.

Nach der Grob- und Feineinstellung des Kanalselektors KS 1 auf die Ausgangslage erfolgt nun seine Einstellung auf den gewählten Kanal. Dazu veranlaßt die Steuerung C über den Steuerbus den Phasenschieber PS des Kanalselektors KS 1, n Vielfache von vollen Verstellschrittzyklen (n entsprechend dem Abstand zwischen Synchronisierkanal und gewähltem Kanal) zu durchlaufen. Je nach Abstand des gewählten Kanals vom Synchronisierkanal erfolgt die Verstellung in der einen oder der anderen Richtung, natürlich auf dem kürzeren Weg.

Die Anzahl der Kanalselektoren KS in diesem modular erweiterbaren Kanalwählersystem ist nach oben praktisch nicht begrenzt. Ihre Mindestanzahl richtet sich nach der Anzahl angeschlossener BB-Endgeräte bzw. nach der Anzahl wählbarer Kanäle, wobei dann auch mehrere Breitband-Endgeräte, bei denen derselbe Kanal gewählt worden ist, an denselben Kanalselektor anzuschalten sind.

Die Mikroprozessor-Steuerung C ist vorteilhaft auch auf die Durchführung von Überwachungs- und Korrekturaufgaben ausgelegt. Beispielsweise können solche Kanalselektoren, die zur Zeit nicht in Betrieb sind, vorsorglich auf die Ausgangslage eingestellt werden, um die Einstellzeit bei einer tatsächlich stattfindenden Kanalwahl zu verkürzen.

Die Überwachung der in Betrieb befindlichen Kanalselektoren kann folgendermaßen erfolgen:

Zunächst wird beim Kanalselektor KSO sicherheitshalber geprüft, ob die Synchronisierkanaldatenbits noch immer optimal abgetastet werden. Danach wird untersucht, ob die aktiven Kanalselektoren die gewünschten Daten noch zum richtigen Zeitpunkt störungsfrei abtasten und in einen 70 oder 280 Mbit/s-Datenstrom umwandeln. Diese Kontrolle wird mit Hilfe des Kanalselektors KSO durchgeführt, indem er auf denselben Kanal wie der untersuchte aktive Kanalselektor gesteuert wird. Werden dabei auftretende Fehler entdeckt, erfolgt sofort eine Korrektor der Einstellung des untersuchten Kanalselektors. Auch ohne auftretende Fehler kann noch eine Untersuchung der Feineinstellung erfolgen.

Selbstverständlich werden Überwachungsmaßnahmen sofort abgebrochen, wenn eine neue Kanalwahlinformation Kw eingeht. Eine Kanalwahl wird also mit höchster Priorität abgewickelt.

Eine Einstellung eines gewählten Kanals bei einem bereits aktiven Kanalselektor KS muß natürlich nicht unbedingt vom Synchronisierkanal ausgehen. Als Ausgangslage kann auch der zuvor gewählte Kanal dienen.

Das Überwachungssystem erlaubt, auftretende Signallaufzeitänderungen in den hochfrequenten Schaltkreisen, z.B. durch Temperaturschwankungen oder Alterung hervorgerufen, schon frühzeitig bei kleinen Abweichungen zu erkennen und selbsttätig zu korrigieren.

Für die Realisierung eines solchen modular erweiterbaren Kanalwählersystems ist es in jedem Falle zweckmäßig, jeweils einem Breitband-Endgerät zugeordnete, das D-Flip-Flop FF, den Frequenzteiler D und den Phasenschieber PS enthaltende Module M V vorzusehen. Damit kann für ein einzelnes zu betreibendes Endgerät eine komplette Kanalwählerschaltung gebildet werden, d.h. es sind ein Synchronisierzeichenvergleicher Sync.-COMP und eine Mikroprozessor-Steuerung C, eventuell auch eine Kanalüberwachungsschaltung K-COMP hinzuzufügen. Es kann auch ein Modul M VI mit allen diesen genannten Elementen vorgesehen werden, der sich durch Hinzufügen von Modulen M V beliebig erweitern läßt und somit mehreren, an einer Teilnehmerstelle befindlichen Kanalwählerschaltungen zugeordnet wird.

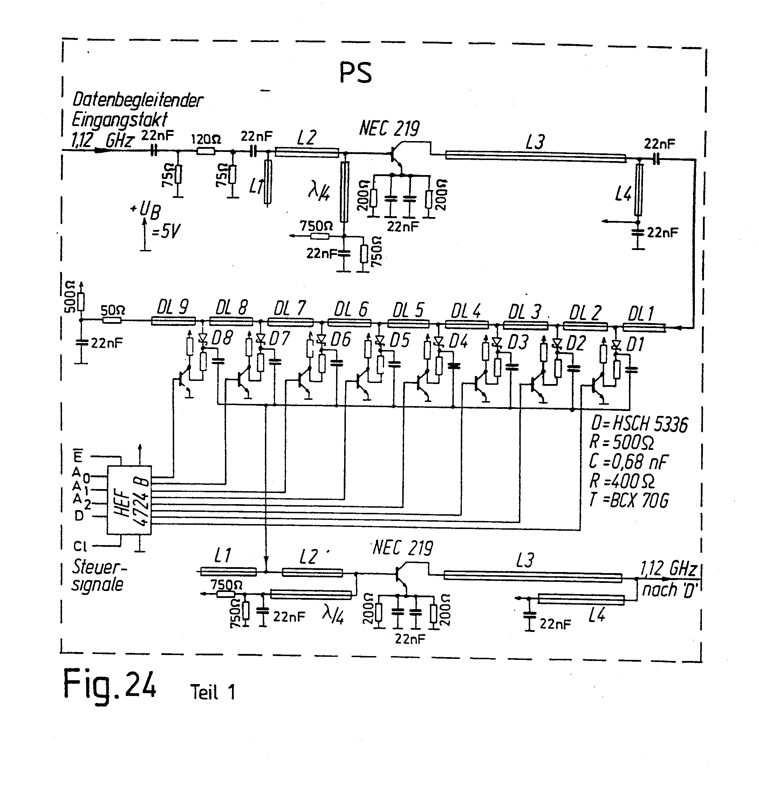

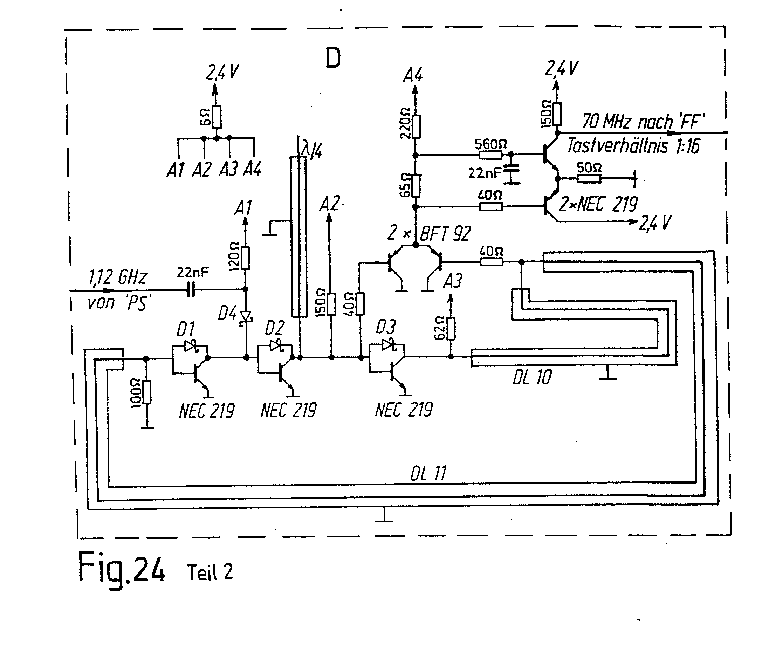

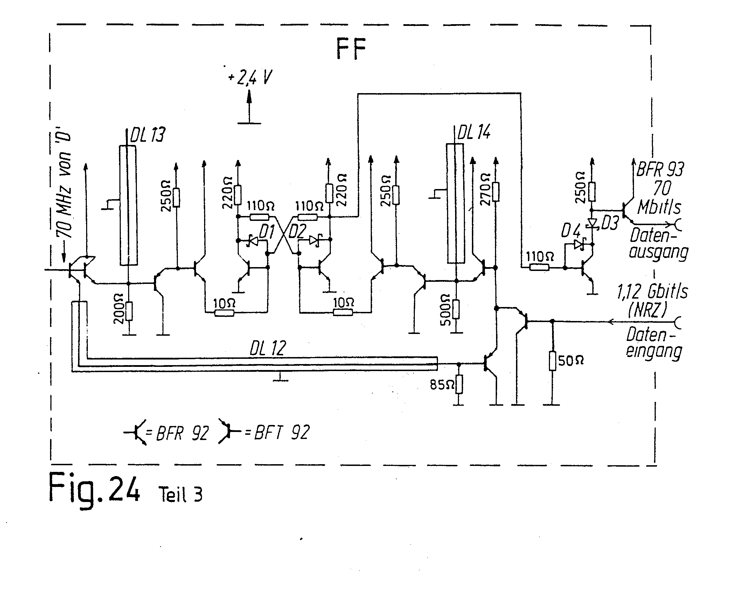

Die Fig. 24 zeigt das Gesamtschaltbild für die spezifischen Elemente dieser Kanalwählerschaltung, nämlich für den Phasenschieber PS (Teil 1 der Fig. 24), den Frequenzteiler D (Teil 2) und die Abtaststufe FF (Teil 3 der Fig. 24). Für die Rückgewinnung des Bittaktes Clb aus dem 1,12 Gbits/s-Datenstrom wird beispielsweise eine nicht dargestellte, an sich bekannte Schaltung mit einem Phasenregelkreis (s. z. B. DE - A 28 54 039) oder dgl. eingesetzt. Die in Fig. 24 gezeigte Schaltung wurde als Dickfilmschaltung, Originalgröße (50,8 x 76,2) mm$^2$ (2" x 3") realisiert und hat eine Leistungsaufnahme von knapp 700 mW. Bei einer Optimierung der Schaltung ist zu erwarten, daß der Leistungsbedarf ca. 500 mW beträgt. Die Module M V/ M VI eignen sich auch zur Realisierung als integrierte Schaltkreise (IC).

Erläuterungen zu Fig. 24:

Teil 1: Phasenschieber, PS

Alle Verzögerungsleitungen: 50 Ω Microstripleitungen, $\varepsilon_{r\ eff}$ = 6.3, λ/4 = 2,66 cm, L1 = 1,81 cm, L2 = 0,57 cm, L3 = 1,01 cm, L4 = 1,19 cm, DL2...DL8 = 1,3 cm, DL1 und DL9 = beliebig lang

Teil 2: Frequenzteiler 1: 16, D

Alle Verzögerungsleitungen: 50 Ω Microstripleitungen, $\varepsilon_{r\ eff}$ = 6.3, λ/4 = 2,66 cm, DL 10 = 5,3 cm, DL 11 = 66 cm, D 1...D 4 = HSCH 5316

Teil 3: Datendetektor- und Speicherstufe, FF

Alle Verzögerungsleitungen: 85 Ω Microstripleitungen, $\varepsilon_{r\ eff}$ = 6.3, DL 12 = 4 cm, DL 13 u. DL 14 = 2,66 cm, D 1... D 3 = HSCH 5316, D 4 = HSCH 5336

HEINRICH-HERTZ-INSTITUT FÜR NACHRICHTENTECHNIK BERLIN GMBH

19/0383 EP

Patentansprüche

1. Kanalwählerschaltung für digitale, bitweise in einem Mehrkanalsystem mit Zeitteilung und einer Gesamtbitrate im Gbit/s-Bereich verschachtelte Breitbandkanäle, wobei zwischen Bittakt (Clb) und Multiplextakt (Clm) die Beziehung

$$Clb = k \cdot Clm \; ; \; k = 2^n$$

mit n = positive ganze Zahl, vorzugsweise $2 \leq n \leq 5$, gilt,
g e k e n n z e i c h n e t   d u r c h
eine bistabile Selektorschaltung für die Datenbits eines bestimmten Breitbandkanals, der einerseits aus dem schnellen Datenstrom abgeleitete Taktfrequenzen
- mit einer Periode entsprechend dem Multiplextakt (Clm) und einer Phasenlage entsprechend der Zeitlage dieses bestimmten ausgewählten Kanals im Zeitrahmen -
und andererseits die vollständige Bitfolge des Datenstromes zugeführt werden, und die diejenige Bitfolge, die dem bestimmten, ausgewählten Breitbandkanal entspricht,selektiert, durch Zwischenspeicherung der einzelnen Bits dieser Folge eine in der Geschwindigkeit herabgesetzte Folge mit entsprechend verlängerten Datenbits erzeugt und diesen langsameren Datenstrom einer betreffenden Breitbandeinrichtung (TV, HDTV, Sync.-ReGen.) zuführt.

2. Kanalwählerschaltung nach Anspruch 1,
g e k e n n z e i c h n e t   d u r c h
- eine Abtaststufenschaltung (FF, FF'), die zur selektierten Zuführung des ausgewählten Breitbandkanals ei-

ner betreffenden Breitband-Einrichtung (TV, HDTV, Sync.ReGen.) vorgeschaltet ist und

– einen Zeitlagenselektor (S, S'), mit dem entsprechend einem von k wählbaren Breitbandkanälen und dessen Zeitlage im Multiplexrahmen die Abtaststufenschaltung (FF, FF') angesteuert wird.

3. Kanalwählerschaltung nach Anspruch 2,
   g e k e n n z e i c h n e t   d u r c h
   eine Abtaststufenschaltung (FF) mit kaskadierten bistabilen Kippschaltungen (FF1, FF2, ... FFn) und einen Zeitlagenselektor (S), der als $180^{\circ}$-Phasenumtaster (PT) ausgebildet ist und dem jeweils gewählten Breitbandkanal entsprechende Selektionssignale (s1, s2, ..., sk) erzeugt, die, zusammen mit ganzzahligen Vielfachen des Multiplextaktes (Clm) als Synchrontakte (cls1, cls2, ..., clsk), der Abtaststufenschaltung (FF) als Steuersignale zugeführt werden.

4. Kanalwählerschaltung nach Anspruch 2 und 3,
   g e k e n n z e i c h n e t   d u r c h
   einen Zeitlagenselektor (S, S'), der mit Exklusiv-Oder-Gattern (EXOR1, EXOR2, ...) aufgebaut ist, die als $180^{\circ}$-Phasenumtaster (PT) arbeiten.

5. Kanalwählerschaltung nach Anspruch 4,
   g e k e n n z e i c h n e t   d u r c h
   Laufzeitglieder (τ1, τ2, ...) in den Zuführungsleitungen für Synchrontakte (cls1, cls2, ...) betreffender Exklusiv-Oder-Gatter (EXOR1, EXOR2, ...).

6. Kanalwählerschaltung nach Anspruch 5,
g e k e n n z e i c h n e t   d u r c h
ein Laufzeitglied ($\tau 2$, $\tau 3$, ...), das in funktioneller Hinsicht zumindest teilweise von einem Gatter (EXOR) gebildet wird.

7. Kanalwählerschaltung nach einem der Ansprüche 2 bis 6,
g e k e n n z e i c h n e t   d u r c h
eine Abtaststufenschaltung (FF, FF') mit zusammengefaßten, hierarchisch benachbarten Kaskadenstufen, in denen einer bistabilen Kippschaltung (FFi), je nach Umfang der hierarchischen Zusammenfassung, über zwei oder mehrere Exklusiv-Oder-Gatter (EXORi1, EXORi2, ...) mit fest als Oder-Schaltung verdrahteten Ausgängen die den zusammengefaßten Hierarchiestufen entsprechenden Selektionssignale (si, sj, ...) und die Synchrontakte (clsj, clsk) der betreffenden hierarchisch tieferen Stufe bzw. Stufen zugeführt werden.

8. Kanalwählerschaltung nach Anspruch 7,
g e k e n n z e i c h n e t   d u r c h
eine Abtaststufenschaltung (FF'), in der solche Kaskadenstufen zusammengefaßt sind, die mit Taktfrequenzen arbeiten, die unterhalb der Arbeitshöchstgeschwindigkeit der eingesetzten Bauelemente, beispielsweise 300 MHz, liegen.

9. Kanalwählerschaltung nach Anspruch 8,
g e k e n n z e i c h n e t   d u r c h
eine Abtaststufenschaltung (FF'), in der eine hierarchisch tiefere Stufe, der ein Strom ausgewählter äquidistanter Daten zugeführt wird, mit zwei bistabilen Kippschaltungen (FF2a, FF2b) aufgebaut ist, die im Bereich ihrer Arbeitshöchstgeschwindigkeit betrieben werden, von denen, jeweils entsprechend der Phasenlage der von der höheren Stufe zugeführten äquidistanten Daten, eine der beiden Kippschaltungen (FF2a bzw. FF2b) freigeschaltet wird und die angelieferten Daten bezüglich des zur Verfügung stehenden Abtastintervalls optimal eingestellt übernimmt, während für dieselbe Phasenlage die andere der beiden Kippschaltungen FF2b bzw. FF2a) gesperrt wird und bezüglich des Abtastintervalls hierfür die - gewollt - ungünstigsten Bedingungen aufweist.

10. Kanalwählerschaltung nach Anspruch 9, g e k e n n z e i c h n e t   d u r c h bistabile Kippschaltungen (FF2a, FF2b), von denen der jeweils gesperrte Pfad derart angesteuert wird, daß dessen Ausgangssignal irrelevant ist.

11. Kanalwählerschaltung nach einem der Ansprüche 2 bis 10, g e k e n n z e i c h n e t   d u r c h einen als Synchronisiertakt-Regenerator (Sync.-ReGen.) ausgebildeten Zeitlagenselektor (S').

12. Kanalwählerschaltung nach Anspruch 1, g e k e n n z e i c h n e t   d u r c h
- ein D-Flip-Flop (FF), das zur selektierten Zuführung eines ausgewählten Breitbandkanals einer betreffenden Breitband-Einrichtung (TV, HDTV, Sync.-ReGen.) vorgeschaltet ist,
- einen Frequenzteiler (D) mit einem Teilungsverhältnis $1 : 2^n$, dem der Bittakt (Clb) zugeführt wird und der, in Abhängigkeit von seinem Einschaltzeitpunkt, jeweils eine der $2^n$ möglichen, zur Kanalauswahl benö-

tiqten Zeitlagen mit einem Teilertakt (Cld) erzeugt,

- eine Vergleicherschaltung (COMP), die ein der aktuellen Abweichung zwischen Multiplextakt (Clm) und
Teilertakt (Cld) entsprechendes Ausgangssignal abgibt,
und

- eine Steuereinrichtung (C), in der das Ausgangssignal der Vergleicherschaltung (COMP) als Istwert mit
einem dem jeweils auszuwählenden Breitbandkanal entsprechenden Sollwert verglichen wird, und die

a) im Falle einer Abweichung zwischen Ist- und Sollwert, d. h. im Suchzustand, die Anschaltung des Bittaktes (Clb) an den Frequenzteiler (D) kurzzeitig, jedoch für eine größere Anzahl von Bittakten (Clb), unterbricht, beziehungsweise

b) im Falle der Übereinstimmung von Ist- und Sollwert,
d. h. im Sollzustand, den vom Frequenzteiler (D) erzeugten Teilertakt (Cld) dem Flip-Flop (FF) als Clock-
Frequenz zuführt.

13. Kanalwählerschaltung nach Anspruch 12,
g e k e n n z e i c h n e t   d u r c h
eine als Phasenvergleicher (P-COMP) ausgebildete Vergleicherschaltung.

14. Kanalwählerschaltung nach Anspruch 13,
g e k e n n z e i c h n e t   d u r c h
eine Ansteuerung des Phasenvergleichers (P-COMP) mit
dem Multiplextakt (Clm) sowie einem demgegenüber um
90$^{\circ}$ versetzten Signal (Clm + $\pi/2$).

15. Kanalwählerschaltung nach Anspruch 14,
g e k e n n z e i c h n e t   d u r c h
eine umschaltbare Ansteuerung des Phasenvergleichers
(P-COMP), die zwischen der Zuführung des Multiplextaktes (Clm) und des demgegenüber um 90$^{\circ}$ versetzten Si-

gnals (Clm + π/2) wechselt.

16. Kanalwählerschaltung nach Anspruch 14,
g e k e n n z e i c h n e t   d u r c h
zwei baugleiche Teile des Phasenvergleichers (P-COMP),
von denen der eine mit dem Multiplextakt (Clm) und der
andere mit dem um $90^o$ dazu versetzten Signal
(Clm + π/2) angesteuert wird.

17. Kanalwählerschaltung nach einem der Ansprüche 13
bis 16,
g e k e n n z e i c h n e t   d u r c h
einen Analog-/Digital-Wandler (A/D) für das Ausgangssignal der Vergleicherschaltung (COMP).

18. Kanalwählerschaltung nach Anspruch 12,
g e k e n n z e i c h n e t   d u r c h
eine als Synchronisierzeichen-Vergleicher (Sync.-COMP)
ausgebildete Vergleicherschaltung.

19. Kanalwählerschaltung nach Anspruch 1,
g e k e n n z e i c h n e t   d u r c h
- ein D-Flip-Flop (FF), das zur selektierten Zuführung
eines ausgewählten Breitbandkanals einer betreffenden
Breitband-Einrichtung (TV, HDTV) vorgeschaltet ist,
- einen Frequenzteiler (D) mit einem Teilungsverhältnis 1 : $2^n$, der jeweils eine der $2^n$ möglichen, zur Kanalauswahl benötigten Zeitlagen mit einem Teilertakt
(Cld) erzeugt,
- einen kontinuierlich, in sich überlappenden Schritten verstellbaren Phasenschieber (PS), der den ihm zugeführten Bittakt (Clb) zeitlich verschoben an den
Frequenzteiler (D) weiterleitet,

- einen Synchronisierzeichenvergleicher (Sync.-COMP), mit dessen Hilfe eine fest vorgegebene Zeitlage im Multiplexrahmen ermittelt wird, um als Ausgangslage für die Einstellung eines gewählten Kanals zu dienen, und durch

- eine Steuereinrichtung (C), die den Umfang der erforderlichen Verstellung im Phasenschieber (PS), sowohl zum Auffinden der Ausgangslage als auch zur Einstellung eines gewählten Kanals, bestimmt.

20. Kanalwählerschaltung nach Anspruch 19, g e k e n n z e i c h n e t   d u r c h einen Phasenschieber (PS) mit mehreren in Reihe geschalteten Laufzeitgliedern ($\tau$p) und Schaltern (A,...,H), die sternförmig von den Verbindungspunkten zwischen je zwei Laufzeitgliedern zu einem zentralen Ausgang des Phasenschiebers (PS) führen und derart betätigbar sind, daß sich die Schließzeiten zweier benachbarter Schalter kurzzeitig überlappen.

21. Kanalwählerschaltung nach Anspruch 19 oder 20, g e k e n n z e i c h n e t   d u r c h einen Phasenschieber (PS) mit zyklisch nacheinander einschaltbaren Phasenverstellschritten.

22. Kanalwählerschaltung nach Anspruch 21, g e k e n n z e i c h n e t   d u r c h einen Phasenschieber (PS) mit acht Phasenverstellschritten zu je 45$^{\circ}$.

23. Kanalwählerschaltung nach einem der Ansprüche 12 bis 18 oder 19 bis 22,

g e k e n n z e i c h n e t    d u r c h

einen Frequenzteiler (D) mit einem abgestuften Teilerverhältnis 1 : 4 : 2 : 2.

24. Kanalwählerschaltung nach Anspruch 23,

g e k e n n z e i c h n e t    d u r c h

ein wählbares Teilerverhältnis des Frequenzteilers (D) in den vorgegebenen Stufen.

25. Kanalwählerschaltung nach einem der Ansprüche 12 bis 24,

g e k e n n z e i c h n e t    d u r c h

eine mit einem Mikroprozessor (µP) aufgebaute Steuereinrichtung (C).

26. Kanalwählerschaltung nach einem der Ansprüche 12 bis 18,

g e k e n n z e i c h n e t    d u r c h

einen, jeweils einem Breitband-Endgerät (TV, HDTV) zugeordneten, das D-Flip-Flop (FF), den Frequenzteiler (D) und den Phasenvergleicher (P-COMP) enthaltenden Modul (MI).

27. Kanalwählerschaltung nach einem der Ansprüche 12 bis 18 und 26,

g e k e n n z e i c h n e t    d u r c h

einen Modul (MII), der das D-Flip-Flop (FF), den Frequenzteiler (D) und den Synchronisierzeichen-Vergleicher (Sync.-COMP) enthält und mehreren, an einer Teilnehmerstelle befindlichen Kanalwählerschaltungen für Breitband-Endgeräte (TV, HDTV) zugeordnet ist.

28. Kanalwählerschaltung nach einem der Ansprüche 2 bis 11, g e k e n n z e i c h n e t   d u r c h einen, jeweils einem Breitband-Endgerät (TV, HDTV) zugeordneten, die Abtaststufenschaltung (FF, FF') und den Zeitlagenselektor (S, S') enthaltenden Modul (MIII).

29. Kanalwählerschaltung nach Anspruch 11 und 28, g e k e n n z e i c h n e t   d u r c h einen Modul (MIV), der die Abtaststufenschaltung (FF, FF'), den Zeitlagenselektor (S, S') und einen Synchronisiermuster-Detektor enthält und mehreren, an einer Teilnehmerstelle befindlichen Kanalwählerschaltungen für Breitband-Endgeräte (TV, HDTV) zugeordnet ist.

30. Kanalwählerschaltung nach einem der Ansprüche 19 bis 25, g e k e n n z e i c h n e t   d u r c h einen, jeweils einem Breitband-Endgerät (TV, HDTV) zugeordneten, das D-Flip-Flop (FF), den Frequenzteiler (D) und den Phasenschieber (PS) enthaltenden Modul (M V).

31. Kanalwählerschaltung nach einem der Ansprüche 19 bis 25 und 30, g e k e n n z e i c h n e t   d u r c h einen Modul(M VI), der das D-Flip-Flop (FF), den Frequenzteiler (D), den Phasenschieber (PS), den Synchronisierzeichen-Vergleicher (Sync.-COMP) und eine Kanalüberwachungsschaltung (K-COMP) enthält und mehreren, an einer Teilnehmerstelle befindlichen Kanalwählerschaltungen für Breitband-Endgeräte (TV, HDTV) zugeordnet ist.

32. Kanalwählerschaltung nach Anspruch 31,
g e k e n n z e i c h n e t   d u r c h
eine mit einem Ex-Or-Gatter(⊕)und einem Register (R)
aufgebaute Kanalüberwachungsschaltung (K-COMP).

33. Kanalwählerschaltung nach einem der Ansprüche
26 bis 31,
g e k e n n z e i c h n e t   d u r c h
als integrierte Schaltkreise (IC) aufgebaute Module
(M I, M II, M III, M IV, M V, M VI).

Teilnehmeranschlußgerät

Zuführung der TV
und HDTV- Programme

$\lambda_1$

SB | SB: 2 Mbit/s          $\lambda_3$
                 LWL    SB: 2 Mbit/s

BB | BB: 1,12 Gbit/s    BB: 280 Mbit/s
                              $\lambda_4$
     $\lambda_2$

SB : Schmalband
BB : Breitband

SB / BB-
Vermittlungs-
und
Verteil-
Zentrale

Externer BB-Verkehr

(z.B. 2.24 Gbit/s)

Externer Fernsprechverkehr

Externer
Datenverkehr

Struktur eines HDTV-fähigen Übermittlungssystems

Einsatz von

- Monomodefasern,
- hochratiger Übertragungstechnik,
- Wellenlängen-Multiplextechnik (WDM),
- Gbit/s-Elektronik

auch im Bereich des Teilnehmeranschlusses

# Fig. 1

| Beispiel ⟶ | Teilnehmer ohne HDTV-Option | HDTV-Teilnehmer | TV/HDTV Teilnehmer* |
|---|---|---|---|
| Festgeschaltetes Grundangebot : | 8 TV-Kanäle<br>≙ 560 Mbit/s | 2 HDTV-Kanäle<br>≙ 560 Mbit/s | 4 TV-Kanäle<br>≙ 280 Mbit/s |
| Vermitteltes Angebot : | 4 TV-Kanäle<br><br>≙ 280 Mbit/s<br>(4 aus n·16) | 1 HDTV-Kanal<br><br>≙ 280 Mbit/s<br>(1 aus n·4) | 4 TV-Kanäle<br>+1 HDTV Kan.<br>≙ 560 Mbit/s<br>(4 aus n·16<br>+1 aus m·4) |
| BiF-Kanäle | 3 ≙ 210 Mbit/s | 3 ≙ 210 Mbit/s | 3 ≙ 210 Mbit/s |
| Sync-Kanal + Stereoton-Verteil-Vermittlung | 70 Mbit/s | 70 Mbit/s | 70 Mbit/s |
| Gesamtrate | 1.12 Gbit/s | 1.12 Gbit/s | 1.12 Gbit/s |

* Doppelter Aufwand an Schaltmoduln

Beispiele zur Nutzung des 1.12 Gbit/s-Kanals im Teilnehmeranschlußbereich

Fig. 2

**BB-MUX-Rahmen [Bit-Interleaving]**

| S/A | 1 | 2 | 3 | 4 | 5 | 6 | 7 | 8 | 9 | 10 | 11 | 12 | 13 | 14 | 15 |

**Fig.3**

Kanal-Nr. →

Übertragung zum Teilnehmer

**Fig.4**

**Fig.5** Informations - Auskopplung bei 1,12 Gbit/s

5/23   0120806

1.12 Gbit/s - Daten (NRZ)

Kanal-Selektor - Modul

Abtaststufenschaltung

1.12 GHz
Takt

FF

Stufe 1 — Stufe 3 — Stufe 4

Rahmen -
Takt -
Ableitung

Kanalinf.
70Mbit/s(TV)
280Mbit/s
(HDTV)

S
(PT) 4 x [0.π]

Kanalwahl

Synchrontakte
(560.280.140.70 MHz)

BB - Endgerät

Fig. 6

Kanal - Selektor

(Mehrstufen-Abtastung)

Fig.7

Anschluß an die
digitale Hochgeschwindig -
keitsleitung

k Abtasttakte

Stufe
1

Abtastbereich

mit

k

Abtast
stufen

Stufe
k

Takt·Ansteuerung

k
Synchrontakte

selektierte

Kanal·Information

k Selekt-Signale

Fig. 8

Anschluß an die
digitale Hochgeschwindigkeitsleitung

(k-m) Abtasttakte

Abtastbereich

mit

(k-m)

Abtast
stufen

| Stufe 1 |
| Stufe k-m |

Takt-Ansteuerung

(k-n)
Synchrontakte

selektierte

Kanal-Information

k Selekt-Signal

## Fig. 9

9/23    0120806

Fig. 10

Fig.11

Hochgeschwindigkeitsltg.

( Bit - Interleaving )

wired or

Exor 3 $\tau = \frac{1}{4f_2}$ s1

FF1,2

cls2 ($f_2 = 280\,MHz$)

$\tau 2$

Exor 4 s2

Exor 3 $\tau = \frac{1}{f_2}$ s3

FF3,4

cls4 ($f_4 = 70\,MHz$)

$\tau 4$

Exor 4 s4

280
Mbit/s

70
Mbit/s

Selektierte Kanal-Inf.

Fig.12

Fig.13

Fig.14

Fig.15

Fig. 16

Fig.17          Kanal-Selektor
                (mit 1-stufiger Abtastung)

Modular erweiterbares Mehrfach-Kanalwählersystem

Fig.18

Kanal-Selektor

**Fig.19** (mit 1-stufiger Abtastung)

HF-Eingang
1,12 GHz

PS

50 Ω

Ausgang(→D)

50 Ω

**Fig.20**

$f_i = 1,12$ GHz

$\tau_G$

$\tau_D$

$f_a = 70\,MHz$

| E₁ | L | H | L | H |
|----|---|---|---|---|
| E₂ | L | L | H | H |
| A  | H | H | H | L |

**Fig.21**

1,12 Gbit/s

70MHz
Tastverhältnis
1:16

$\tau_S$

Impulsformstufe

Impulsformstufe

S

R

RS-
Flipflop

$\bar{Q}$

Q

70 Mbit/s

FF

**Fig.22**

Fig.23

Fig.24　Teil 1

**Fig.24**   Teil 2

**Fig.24** Teil 3